# EUROPEAN PATENT SPECIFICATION

(11) **EP 4 082 157 B1**
(45) Date of publication and mention of the grant of the patent: **06.08.2025**
(21) Application number: 20908217.1
(22) Date of filing: 18.09.2020
(51) Int. Cl.: G06F 3/06

(54) **STORAGE MANAGEMENT IN A DATA MANAGEMENT PLATFORM FOR CLOUD-NATIVE WORKLOADS**
SPEICHERVERWALTUNG IN EINER DATENVERWALTUNGSPLATTFORM FÜR CLOUD-NATIVE ARBEITSLASTEN
GESTION DE STOCKAGE DANS UNE PLATEFORME DE GESTION DE DONNÉES POUR CHARGES DE TRAVAIL NATIVES EN NUAGE

(30) Priority: 27.12.2019 US 201916729075
(43) Date of publication of application: 02.11.2022
(73) Proprietor: INTEL Corporation, Santa Clara, CA 95054 (US)
(72) Inventor: BANYAI, Christopher J., Chandler, Arizona 85286 (US); COHEN, David E., Hull, Massachusetts 02045 (US); CARVALHO, Joe, Lantana, Texas 76226 (US); STACHOWSKI, Michal, 80-177 Gdansk (PL); ALLURI, Prasad, El Dorado Hills, California 95762 (US); SCHARMACH, Szymon Tomasz, 80-433 Gdansk (PL)
(74) Representative: Rummler, Felix
(86) International application number: PCT/US2020/051560
(87) International publication number: WO 2021/133443

(56) References cited:
- KR-A- 20160 074 648
- US-A1- 2009 150 542
- US-A1- 2014 317 206
- US-A1- 2016 036 924
- US-A1- 2017 091 108
- US-A1- 2018 109 610
- US-A1- 2018 293 023
- US-A1- 2018 300 075
- US-A1- 2019 245 924
- US-A1- 2019 245 924
- US-A1- 2019 273 672
- US-A1- 2019 334 795
- US-A1- 2020 136 943
- US-B1- 10 048 996
- US-B1- 7 275 103
- US-B1- 9 946 577

## Description

### BACKGROUND

Cloud computing provides access to servers, storage, databases, and a broad set of application services over the Internet. A cloud service provider offers cloud services such as network services and business applications that are hosted in servers in one or more data centers that can be accessed by companies or individuals over the Internet. Hyperscale cloud-service providers typically have hundreds of thousands of servers. Each server in a hyperscale cloud includes storage devices to store user data, for example, user data for business intelligence, data mining, analytics, social media and micro-services. The cloud service provider generates revenue from companies and individuals (also referred to as tenants) that use the cloud services. For example, a tenant can pay a monthly fee to the cloud service provider based on an amount of storage allocated to the tenant to store data.

The majority of enterprise datacenters today do not have the capacity to effectively manage and handle petabytes of data at scale and at performance. Data-intensive applications and tools such as Artificial Intelligence (AI) inferencing and analytics generate and consume an exploding amount of data and telemetry that needs to be moved, stored and processed in a more secure, faster, and scalable way. In a hyper-scaled datacenter, this is typically performed by adding additional servers to the datacenter. However, dependent on the workloads being run in the datacenter, one type of component in these servers may be over-subscribed, while another maybe underutilized, which means customers and service providers are not optimizing the use of their investment.

US 2019/245924 A1 relates to background information.

### SUMMARY OF THE INVENTION

The invention is as defined in the appended claims. In the following description, any embodiment referred to and not falling within the scope of the claims is merely an example useful to the understanding of the invention.

### BRIEF DESCRIPTION OF THE DRAWINGS

Features of embodiments of the claimed subject matter will become apparent as the following detailed description proceeds, and upon reference to the drawings, in which like numerals depict like parts, and in which:
Fig. 1 is a conceptual view of an embodiment of a Data Management Platform (DMP);
Fig. 2 is a block diagram of an embodiment of the Data Management Platform shown in Fig. 1 in a physical cluster;
Fig. 3 is a block diagram on an embodiment of one of the compute servers in the Data Management Platform shown in Fig. 2;
Fig. 4 is a block diagram on an embodiment of one of the accelerator servers in the Data Management Platform shown in Fig. 2;
Fig. 5 is a logical view of access to solid-state drives from the compute server in the Data Management Platform shown in Fig. 2;
Fig. 6 is a block diagram of the accelerator server shown in Fig. 4 that performs resource control of storage services;
Fig. 7 illustrates data transfer between the network interface controller and solid-state drive in the accelerator server;
Fig. 8 is a flowgraph illustrating a method to move data from the solid-state drive to the data plane via the L3 cache and network interface controller;
Fig. 9 illustrates an embodiment to configure the last level cache to isolate N sets of cache ways of the last level cache to be shared by the solid-state drive and the network interface controller;
Fig. 10 is a flowgraph illustrating an embodiment of a method to configure a set of cache ways in the last level cache to be shared by the solid-state drive and the network interface controller;
Fig. 11 is a block diagram of an embodiment of a rack in the Data Management Platform in a physical cluster shown in Fig. 2 for normal operation in a healthy system;
Fig. 12 is a block diagram of an embodiment of a rack in the Data Management Platform in a physical cluster shown in Fig. 2 for degraded operation in a failing system;
Fig. 13 is a block diagram that illustrates metrics exporters in containers in a pod in a node that are used by the Data Management Platform to detect node condition/failures.
Fig. 14 is a flowgraph illustrating a method for managing hardware failures in the Data Management Platform in a physical cluster;
Fig. 15 is a block diagram that illustrates hardware events and measurements in in a node that are used by the Data Management Platform to Monitor and manage performance thresholds to detect node condition and failures;
Fig. 16 is a flowgraph illustrating a method implemented in a storage node in the rack to monitor performance of the storage node;
Fig. 17 is a block diagram of an embodiment of a compute node;
Fig. 18 is a block diagram of another embodiment of a compute node;
Fig. 19 is a block diagram of an embodiment of a rack in the Data Management Platform in the physical cluster shown in Fig. 2 that includes a resource manager to automatically add and remove logical resources;
Fig. 20 is a flow graph of a method to automatically add or remove logical resources in response to detection of pressure in the rack in the Data Management Platform shown in Fig. 19;
Fig. 21 is a block diagram of an embodiment of a physical cluster in the Data Management Platform that includes a storage self-healing mechanism; and
Fig. 22 illustrates an embodiment of mapping of workloads in the cluster shown in Fig. 21.

Although the following Detailed Description will proceed with reference being made to illustrative embodiments of the claimed subject matter, many alternatives, modifications, and variations thereof will be apparent to those skilled in the art. Accordingly, it is intended that the claimed subject matter be viewed broadly, and be defined as set forth in the accompanying claims.

### DESCRIPTION OF EMBODIMENTS

A data management platform includes accelerator servers and compute servers. Storage devices managed by accelerator servers are disaggregated from compute servers to enable storage capacity to scale independent of compute.

Various embodiments and aspects of the inventions will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in order to provide a concise discussion of embodiments of the present inventions.

Reference in the specification to "one embodiment" or "an embodiment" means that a particular feature, structure, or characteristic described in conjunction with the embodiment can be included in at least one embodiment of the invention. The appearances of the phrase "in one embodiment" in various places in the specification do not necessarily all refer to the same embodiment.

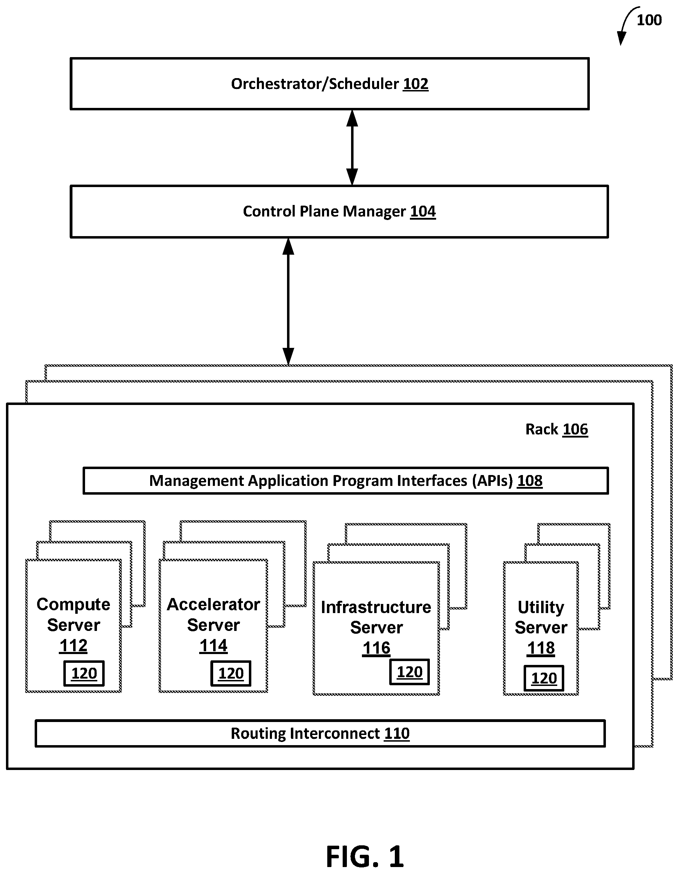

Fig. 1 is a conceptual view of an embodiment of a Data Management Platform (DMP) 100. In the embodiment shown in Fig. 1, the Data Management Platform 100 is a rack-centric, physical cluster with racks 106 interconnected via a routing interconnect 110. The routing interconnect 110 can be an Ethernet fabric arrayed in a multi-stage Clos topology or any other Open Systems Interconnect (OS1) layer 3 routing interconnect.

A rack 106 in a datacenter is a type of physical steel and electronic framework that is designed to house servers, networking devices, cables and other data center computing equipment. Each rack 106 connects into the routing interconnect 110 and can include one or more compute servers 112, accelerator servers 114, utility servers 118 and infrastructure servers 116. A server can also be referred to as a node.

The utility servers 118 are used to initialize the physical cluster. During initialization the utility servers 118 perform orchestration and scheduling functions. In an embodiment, Kubernetes (K8s) is used to perform functions for the orchestrator/scheduler 102. Kubernetes is an open-source container-orchestration system for automating application deployment, scaling, and management. The Kubernetes Control Plane is hosted on the Infrastructure Servers 116. The Kubernetes Host Agent runs on all Compute servers 112 and accelerator servers 114.

Application deployment can also be automated through the use of a virtual machine. Other examples of an Orchestrator/scheduler 102 include OpenShift (a platform as a service (PaaS) from Red Hat that is built on Docker and Kubernetes) and Pivotal Container Service (PKS).

Control plane manager 104 can perform functions to create, manage, and update infrastructure resources such as Virtual Machines. The control plane manager 104 can also initialize physical machines and network switches. Examples of control plane managers 104 include Fleet, Red Hat Satellite, Teraform and Metal As A Service (MaaS).

Each of the compute servers 112, accelerator servers 114, utility servers 118 and infrastructure servers 116 includes a Baseboard Management Controller (BMC) 120. The BMC 120 is a specialized service processor that monitors the physical state of the compute servers 112, accelerator servers 114, utility servers 118 and infrastructure servers 116 and provides services to monitor and control operations via Management APIs 108. Examples of Management APIs 108 include the Intelligent Platform Management Interface (IPMI), Redfish^{®} (a Distributed Management Task Force (DMTF) Standard) and Dell^{®} Open Manage Enterprise (OME).

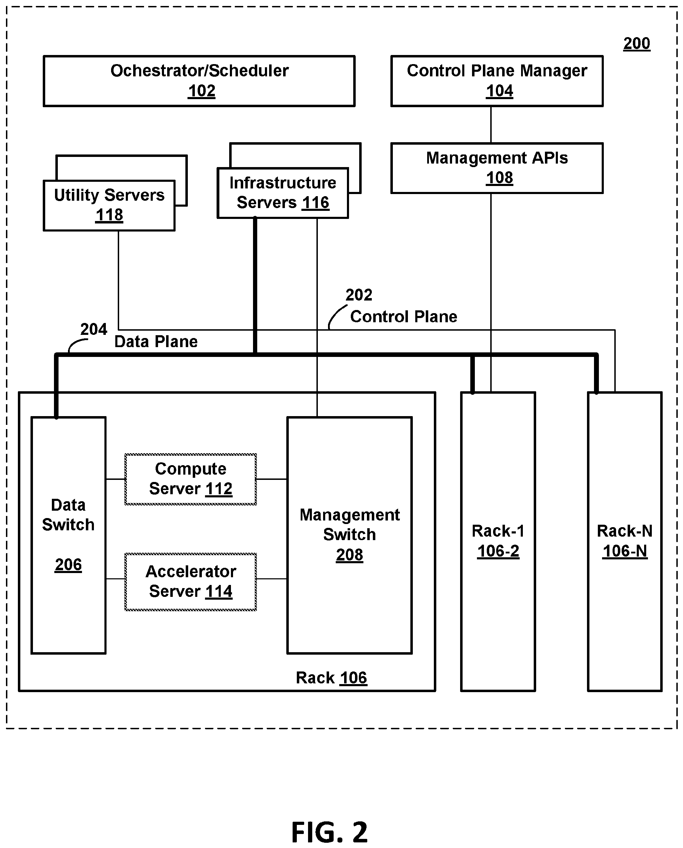

Fig. 2 is a block diagram of an embodiment of the Data Management Platform (DMP) 100 shown in Fig. 1 in a physical cluster 200. The physical cluster 200 has N racks 106, 106-1,...106-N. In one embodiment, N is 16. Each rack 106 includes a compute server 112 and at least one accelerator server 114. Each compute server 112 and accelerator server 114 is communicatively coupled to a data switch 206 and a management switch 208. The data switch 206 in each rack 106 provides a data plane 204 (also referred to as a data fabric) between compute servers 112 and accelerator servers 114 in a same rack 106, in other racks 106 and infrastructure servers 116 shared by the plurality of racks 106. The management switch 208 in each rack 106 provides a control plane 202 (also referred to as a management network) between the racks 106 and utility servers 118 shared by the plurality of racks 106.

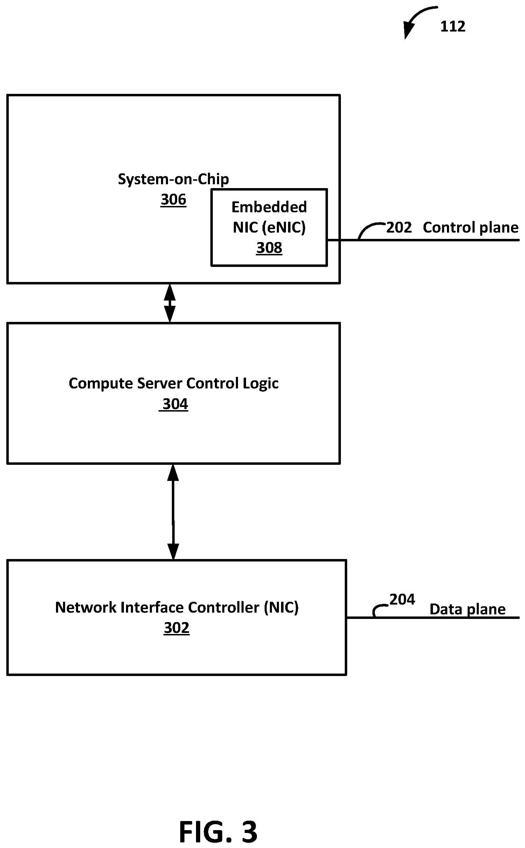

Fig. 3 is a block diagram of an embodiment of one of the compute servers 112 in the physical cluster 200 shown in Fig. 2. In the embodiment shown, the compute server 112 includes a System-on-Chip 306, a network interface controller 302 and compute server control logic 304. The network interface controller 302 is communicatively coupled to the data plane 204 shown in Fig. 2. An embedded network interface controller 308 in the System-on-Chip 306 is communicatively coupled to the control plane 202 shown in Fig. 2.

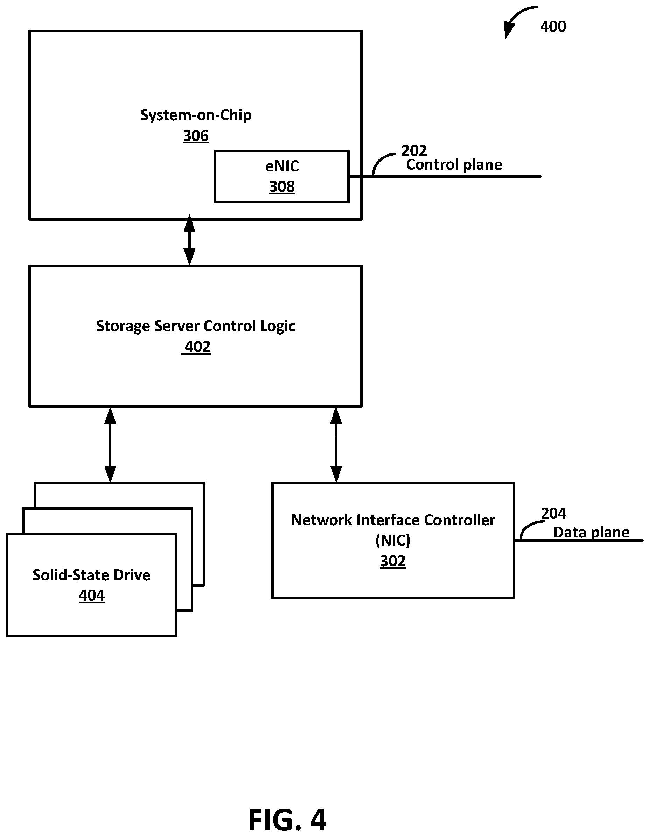

Fig. 4 is a block diagram of an embodiment of one of the accelerator servers 114 in the physical cluster 200 shown in Fig. 2. In the embodiment shown, the accelerator server 114 performs storage processing tasks, and can be referred to as a storage server 400.

The storage server 400 includes storage server control logic 402 communicatively coupled to System-on-Chip 306, network interface controller 302 and one or more solid-state drives 404. In an embodiment, the storage server control logic 402 is communicatively coupled to the solid-state drives 404 and network interface controller 302 using the Peripheral Component Interconnect (PCI)-Express (PCIe) protocol. An embedded network interface controller 308 in the System-on-Chip 306 is communicatively coupled to the control plane 202 shown in Fig. 2.

The storage server control logic 402 performs storage processing tasks offloaded by the System-on-Chip 306 to allow compute and storage to be disaggregated into independently scalable resources.

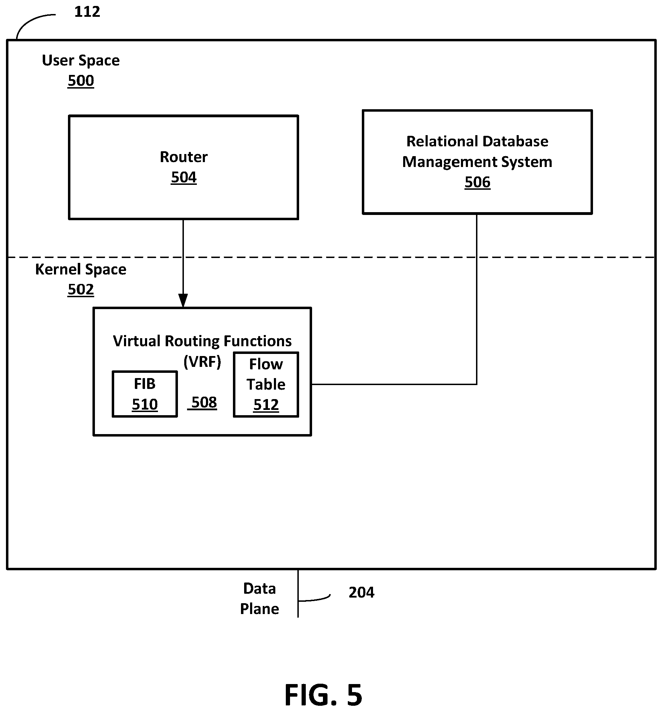

Fig. 5 is a logical view of access to solid-state drives 404 from the compute server 112 in the physical cluster 200 shown in Fig. 2. Virtual Routing Functions 508 in operating system kernel space 502 provide access for a relational database management system 506 in user space 500 to data stored in solid-state drives 404 in the storage server 400 (Fig. 4) via the data plane 204. The virtual routing functions 508 include a Forwarding Information Base (FIB) 510 and a Flow Table 512 that stores routes and policy.

Router 504 provides secure network connectivity for virtual managers and containers. An example of the router 504 is Calico. Calico provides secure network connectivity for containers and virtual machine workloads. Calico uses Layer 3 (the network layer) of the Open System Interconnection (OSI) model and the Border Gateway Protocol (BGP) to build routing tables. Calico creates a flat Layer-3 network and assigns a fully routable Internet Protocol (IP) address to every rack 106. Workloads can communicate without IP encapsulation or network address translation for bare metal performance. Calico uses Felix (a per node domain daemon) to configure routes and enforce network policies.

Shared resources, such as last level cache (LLC) and main memory bandwidth have a significant effect on workload performance in the Data Management Platform (DMP). Monitoring and managing these resources more closely enables deployments to meet more stringent workload demands including increasingly strict performance service-level agreements (SLAs).

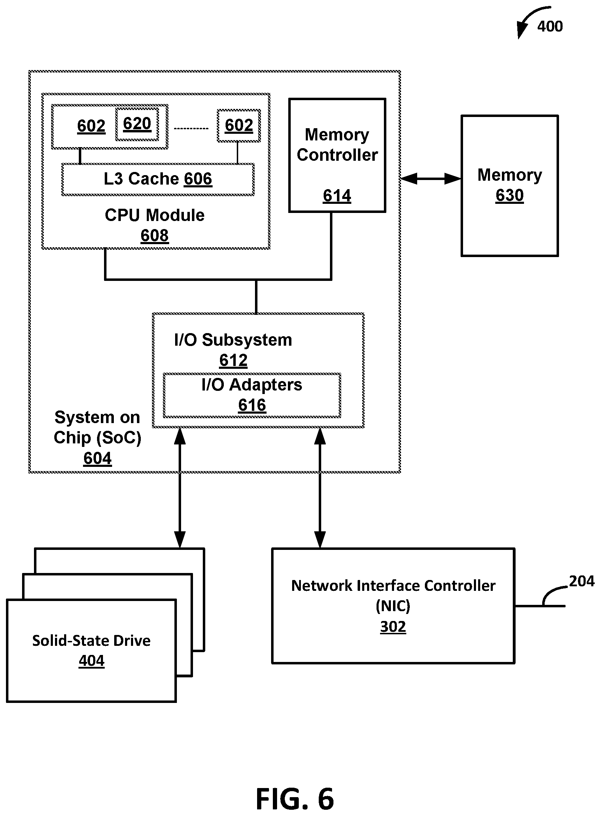

Fig. 6 is a block diagram of the storage server 400 shown in Fig. 4 that performs resource control of storage services.

The storage server 400 includes a system on chip (SOC or SoC) 604 that combines processor, memory, and Input/Output (I/O) control logic into one SoC package. The SoC 604 includes at least one Central Processing Unit (CPU) module 608 and a memory controller 614. In other embodiments, the memory controller 614 can be external to the SoC 604. The CPU module 608 includes at least one processor core 602 that includes a Level 1(L1) and Level 2 (L2) cache 620, and a level 3 (L3) cache 606 that is shared with other processor cores 602 in the CPU module 608.

Although not shown, each of the processor cores 602 can internally include execution units, prefetch buffers, instruction queues, branch address calculation units, instruction decoders, floating point units, retirement units, etc. The CPU module 608 can correspond to a single core or a multi-core general purpose processor, such as those provided by Intel^{®} Corporation, according to one embodiment.

Within the I/O subsystem 612, one or more I/O interface(s) 616 are present to translate a host communication protocol utilized within the processor cores 602 to a protocol compatible with particular I/O devices. Some of the protocols that I/O interfaces can be utilized for translation include Peripheral Component Interconnect (PCI)-Express (PCIe); Universal Serial Bus (USB); Serial Advanced Technology Attachment (SATA) and Institute of Electrical and Electronics Engineers (IEEE) 1594 "Firewire".

The I/O interface(s) 616 can communicate via memory 630 and/or L3 cache 606 with one or more solid-state drives 404 and network interface controller 302. The solid-state drives 404 can be communicatively and/or physically coupled together through one or more buses using one or more of a variety of protocols including, but not limited to, SAS (Serial Attached SCSI (Small Computer System Interface)), PCIe (Peripheral Component Interconnect Express), NVMe (NVM Express) over PCIe (Peripheral Component Interconnect Express), and SATA (Serial ATA (Advanced Technology Attachment)). In other embodiments, other storage devices, for example, other storage devices such as Hard Disk Drives (HDD) can be used instead of solid-state drives 404 and the Hard Disk Drives and/or Solid-State drives can be configured as a Redundant Array of Independent Disks (RAID).

Non-Volatile Memory Express (NVMe) standards define a register level interface for host software to communicate with a non-volatile memory subsystem (for example, solid-state drive 404) over Peripheral Component Interconnect Express (PCIe), a high-speed serial computer expansion bus. The NVM Express standards are available at www.nvmexpress.org. The PCIe standards are available at www.pcisig.com.

In an embodiment, memory 630 is volatile memory and memory controller 614 is a volatile memory controller. Volatile memory is memory whose state (and therefore the data stored in it) is indeterminate if power is interrupted to the device. Dynamic volatile memory requires refreshing the data stored in the device to maintain state. One example of dynamic volatile memory includes DRAM (Dynamic Random Access Memory), or some variant such as Synchronous DRAM (SDRAM). A memory subsystem as described herein can be compatible with a number of memory technologies, such as DDR3 (Double Data Rate version 3, original release by JEDEC (Joint Electronic Device Engineering Council) on June 27, 2007). DDR4 (DDR version 4, initial specification published in September 2012 by JEDEC), DDR4E (DDR version 4), LPDDR3 (Low Power DDR version3, JESD209-3B, August 2013 by JEDEC), LPDDR4) LPDDR version 4, JESD209-4, originally published by JEDEC in August 2014), WIO2 (Wide Input/Output version 2, JESD229-2 originally published by JEDEC in August 2014, HBM (High Bandwidth Memory, JESD325, originally published by JEDEC in October 2013, DDR5 (DDR version 5, currently in discussion by JEDEC), LPDDR5, HBM2 (HBM version 2), currently in discussion by JEDEC, or others or combinations of memory technologies, and technologies based on derivatives or extensions of such specifications. The JEDEC standards are available at www.jedec.org.

In another embodiment, memory 630 is a non-volatile memory (NVM) and memory controller 614 is a non-volatile memory controller. A non-volatile memory device is a memory whose state is determinate even if power is interrupted to the device. A non-volatile memory device can include a byte-addressable write-in-place three dimensional crosspoint memory device, or other byte addressable write-in-place NVM devices (also referred to as persistent memory), such as single or multi-level Phase Change Memory (PCM) or phase change memory with a switch (PCMS), NVM devices that use chalcogenide phase change material (for example, chalcogenide glass), resistive memory including metal oxide base, oxygen vacancy base and Conductive Bridge Random Access Memory (CB-RAM), nanowire memory, ferroelectric random access memory (FeRAM, FRAM), magneto resistive random access memory (MRAM) that incorporates memristor technology, spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In yet another embodiment, memory 630 includes both byte addressable write-in-place NVM devices and volatile memory devices that can be included on one or more memory modules.

Shared resources that have a significant effect on workload performance include processor cache and memory bandwidth resources, which can have a large impact on application performance and runtime determinism. Monitoring and managing these resources more closely enables deployments to meet more stringent workload demands including increasingly strict performance service-level agreements (SLAs) to support emerging workloads such as Network Function Virtualization (NFV).

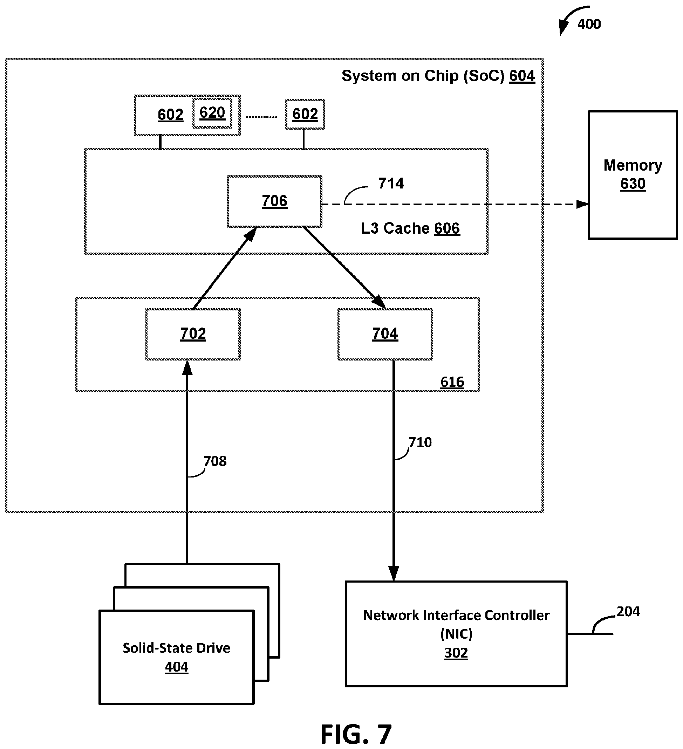

Fig. 7 illustrates data transfer between the network interface controller 302 and the solid-state drive 404 in the storage server 400. I/O adapter(s) 616 include a first PCIe adapter 702 to manage communications over a first PCIe interface 708 from the solid-state drive 404 and a second PCIe interface 704 to manage communications over a first PCIe interface 708 to the network interface controller 302. The network interface controller 302 can exchange data using Remote Direct Memory Access (RDMA), for example, a direct memory access from L3 cache 606 and/or memory 630 to memory of the compute server 112 or another accelerator server 114 communicatively coupled to the data plane 204.

The solid-state drive 404 and network interface controller 302 exchange data through the L3 cache 606 and/or memory 630. L3 cache 606 can also be referred to as a last level cache (LLC). In addition to being shared with other processor cores 602 in the CPU module 608, the level 3 (L3) cache 606 is also shared with the first PCIe interface 708 and the second PCIe interface 710.

Multiple agents (processor cores 602, the first PCIe interface 708 and the second PCIe interface 710) all competitively accessing the same L3 cache 606 can result in cache misses in L3 cache 606, cache evictions from L3 cache 606 to memory 630 and high latency variability in transactions for the agents. If the bandwidth of the network interface controller 302 is well matched to the bandwidth of the solid-state drive 404 and the L3 cache 606 is of sufficient size, the majority of the data transfer between the solid-state drive 404 and the network interface controller 302 occurs through the L3 cache 606 with no eviction ("spill") to the memory 630 via path 714.

To minimize spill from L3 cache 606 to the memory 630, a configurable portion (subset of cache ways) of the L3 cache 606 is dedicated to storing data to be transferred between the solid-state drive 404 and the network interface controller 302. In the embodiment shown in Fig. 6, there are N processor cores 602-1, ..602-N. A first subset of cache ways 712 of the L3 cache 606 is dedicated to both processor core 602-1 and processor core 602-2. A second subset of cache ways 706 of the L3 cache 606 is dedicated to processor core 602-3, solid-state drive 404 and the network interface controller 302.

In an embodiment, Intel^{®} Cache Allocation Technology (CAT) can be used to enable a subset of cache ways of the L3 cache 606 to be dedicated to specific processor cores 602-1, .. 602-N and/or I/O memory spaces (PCIe), controlling which agents share/compete for a specific subset of cache ways (or portion) of the L3 cache 606. All other agents are excluded from using the second set of cache ways 706 in the L3 cache 606 that is dedicated to storing data to be transferred between the solid-state drive 404 and the network interface controller 302.

The use of the configurable second subset of cache ways 706 of the L3 cache 606 reduces workload variability providing a more precise and predictable resource allocation of storage services versus other co-located workloads enabling more accurate service level predictability of co-located storage services with other workloads. Three quality of service mechanisms (cache, core/Input/Output memory and logical volume bandwidth throttling) are combined to provide tunable resource sharing, isolation and reduction of variation.

Containers (for example, a Kubernetes container or a Virtual machine container) and threads related to storage services and networking are allocated a subset of cache ways or buffer space and an effective allocation to a sub-set of memory bandwidth (memory transaction credits in one embodiment - memory bandwidth enforcement) to constrain network/storage functions to a sub-set of cache/buffer ways and/or memory bandwidth. With suitable bandwidth matching of storage server network allocation and L3 cache 606 bandwidth/size allocation, the storage server 400 can support storage to/from network data flows wholly or nearly wholly through the second portion of cache ways 706 in the L3 cache 606 with little or no spill of data to memory 630.

In addition, there are operating systems mechanisms (for example, a device mapper in the Linux operating system), to partition the access bandwidth of logical volumes (LVM) on a single storage device (such as but not limited to an NVMe solid-state drive) to a set bandwidth, for example, 200 Mega Bytes per second (MB/s). Combining logical volume rate Quality of Service controls with the configurable subset of cache ways described above provide an overall system solution to provide a storage service workload co-existing with other workloads in a more tunable and predicable manner.

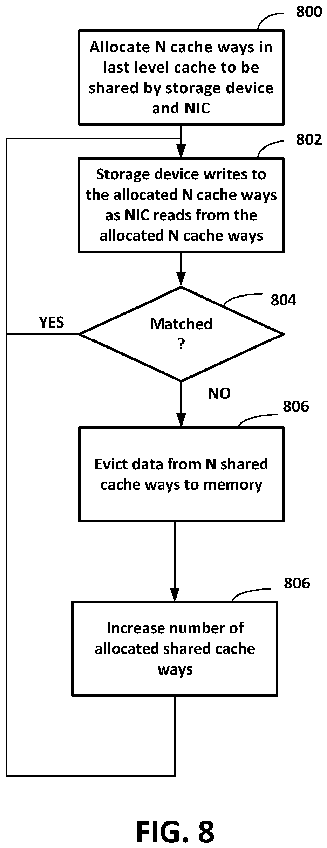

Fig. 8 is a flowgraph illustrating a method to move data from the solid-state drive 404 to the data plane 204 via the L3 cache 606 and network interface controller 302. Data can also be moved from in the opposite direction from the network interface controller 302 to the solid-state drive 404 to the data plane 204 via the L3 cache 606.

At block 800, a fixed number of cache ways (for example, second subset of cache ways 706) are allocated in the L3 cache 606 to store data shared by the solid-state drive 404 and the network interface controller 302. The fixed number of cache ways is tunable based on system performance requirements. The number of cache ways that are allocated in second subset of cache ways 706 for use only to store data to be transferred between the solid-state drive 404 and the network interface controller 302 reduces the number of cache ways in the L3 cache that are available for use by other cores and results in reduced performance for the other cores.

In an embodiment, the fixed number that is selected is not dynamically modified during operation. The N cache ways in the configurable portion of the L3 cache 606 are also shared by one or more processor cores 602 (for example, 602-2). The second subset of cache ways 706 of the L3 cache 606 are isolated from other agents. The remaining cache ways in the L3 cache 606 (for example, first set of cache ways 712) can be used/shared by other agents.

At block 802, the solid-state drive 404 is configured to write data directly (via Direct Memory Access) to the second subset of cache ways 706 of the L3 cache 606 and the network interface controller 302 is configured to read data directly (via Direct Memory Access) from the second subset of cache ways 706 of the L3 cache 606. The solid-state drive 404 writes data to the second subset of cache ways 706 of the L3 cache 606 while the network interface controller 302 is reading data from the second subset of cache ways 706 of the L3 cache 606.

At block 804, if the rate that the solid-state drive 404 writing to the second subset of cache ways 706 of the L3 cache 606, and the rate that the network interface controller 302 is reading data from the second subset of cache ways 706 of the L3 cache 606 is not matched, processing continues with block 806. If the rate that the solid-state drive 404 is writing to the second subset of cache ways 706 of the L3 cache 606, and the network interface controller 302 is reading data from the second subset of cache ways 706 of the L3 cache 606 is matched, processing continues with block 802.

At block 806, data is evicted from the L3 cache 606 to the memory 630 to allow the solid-state drive 404 to continue to write data to the second subset of cache ways 706 of the L3 cache 606. The eviction of data from the L3 cache can be referred to as cache spill.

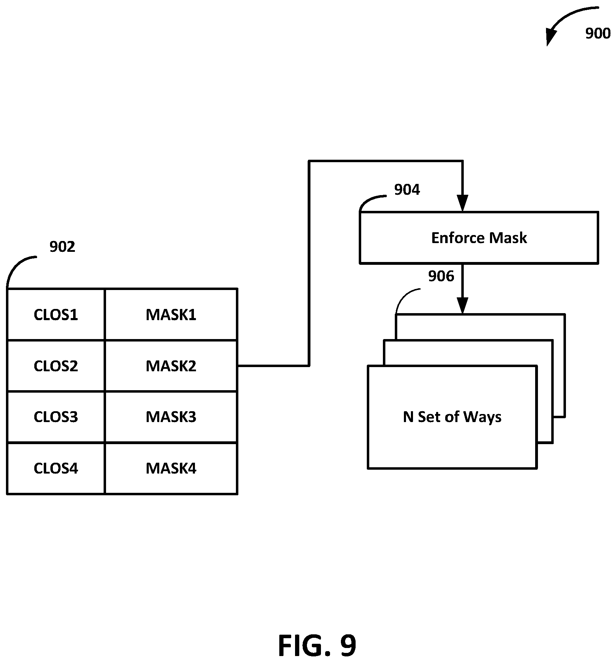

Fig. 9 illustrates an embodiment to configure the last level cache to isolate N sets of cache ways 906 of the L3 cache 606 (also referred to as the last level cache) to be shared by the solid-state drive 404 and the network interface controller 302. Intel^{®} Cache Allocation Technology (CAT) includes a Class of Service (CLOS) that acts as a resource control tag into which a thread/app/Virtual Memory (VM)/container can be grouped. Each Class of Service has an associated resource capacity bitmask (CBM) indicating how much of the last level cache can be used by a given Class of Service. In the embodiment shown in Fig. 9, a Class of Service table 902 has four classes of service labeled CLOS1-CLOS4. In other embodiments there can be more or less than four classes of service. Each CLOS register has a bit per processor core 602, the state of the bit indicates if the core is part of the particular class of service. Enforce mask 904 is circuitry/logic that limits cache mapping to the cache-way bitmap encoded in respective CLOS register.

In the embodiment shown, each class of service CLOS1-CLOS4 has an associated capacity bit mask labeled mask1-mask4. The values of each bit in the capacity bit mask indicate the amount of the L3 cache 606 available for the class of service and if any of the cache ways in the sets of cache ways 906 are shared by the classes of service CLOS1-CLOS4.

In an embodiment, a capacity bit mask associated with a class of service is dedicated to storing data shared by the network interface controller a portion of the sets of cache ways 906 are shared by the solid-state drive 404 and the network interface controller 302.

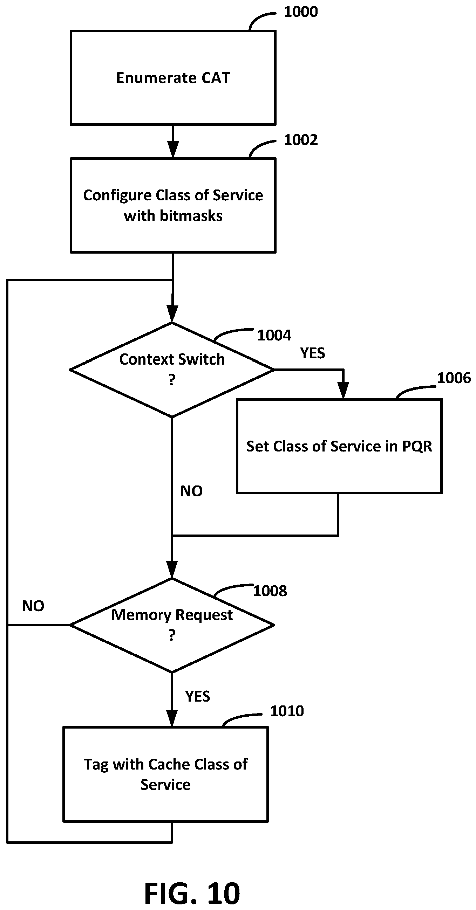

Fig. 10 is a flowgraph illustrating an embodiment of a method to configure and use a set of cache ways in the last level cache to be shared by the solid-state drive 404 and the network interface controller 302.

Cache Allocation Technology enables resource allocation based on application priority or Class of Service (COS or CLOS). A processor exposes a set of Classes of Service into which applications (or individual threads) can be assigned. Cache allocation for the respective applications or threads is restricted based on the class with which they are associated. Each Class of Service can be configured using capacity bitmasks which represent capacity and indicate the degree of overlap and isolation between classes. For each logical processor there is a register exposed to allow the Operating System/Virtual Machine Manager to specify a class of service when an application, thread or Virtual Machine is scheduled. The usage of Classes of Service are consistent across resources and a class of service may have multiple resource control attributes attached, which reduces software overhead at context swap time. Rather than adding new types of class of service tags per resource, the class of service management overhead is constant. Cache allocation for the indicated application/thread/container/VM is controlled automatically by the hardware based on the class and the bitmask associated with that class. Bitmasks can be configured via mode status registers for L3 cache.

At block 1000, Cache Allocation Technology enables an Operating System (OS), Hypervisor /Virtual Machine Manager (VMM) or similar system service management agent to specify the amount of cache space into which an application can fill. Enumeration support is provided to query which levels of the cache hierarchy are supported and specific Cache Allocation Technology capabilities, such as the max allocation bitmask size.

At block 1002, the Operating System or Hypervisor configures the amount of a resource available to a particular Class of Service via a list of allocation bitmasks. The bit length of the capacity mask available is dependent on the configuration of the L3 cache.

At block 1004, if there is a context switch, processing continues with block 1006. If not, processing continues with block 1008.

At block 1006, a currently running application class of service is communicated to the execution environment (Operating System/Virtual ). A different class of service can be loaded if class of service for new thread is different from currently running application class of service. Processing continues with block 1008.

At block 1008, if there is a memory request, processing continues with block 1010. If not, processing continues with block 1004.

At block 1010, the class of service associated with the memory access is used to enforce the cache allocation. Processing continues with block 1004.

Returning to Fig. 2, recovery of hardware failures in the Data Management Platform 100 in a physical cluster 200 can be performed by hardware or software load balancers together with health checks. Hardware failures can include hardware failures in compute servers 112, accelerator servers 114, the data switch 206, the management switch 208, infrastructure servers 116 and utility servers 118. Each of the servers (compute servers 112, accelerator servers 114, infrastructure servers 116 and utility servers 118) can also be referred to as a node. Typically, a logging system is used to flag events and an operator manually intervenes to remove or replace the failing hardware when a particular event is logged.

However, current load balancers do not consider degrading hardware components and/or degrading performance based on failing or degrading hardware in the Data Management Platform 100. In addition, current load balancers are difficult to scale in enterprise datacenters.

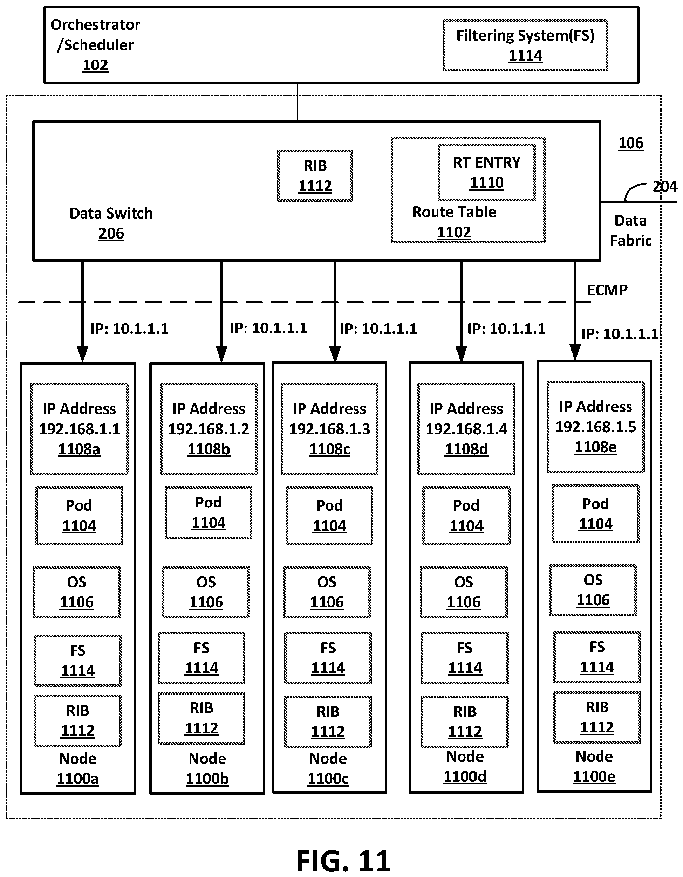

Fig. 11 is a block diagram of an embodiment of a rack 106 in the Data Management Platform 100 in the physical cluster 200 shown in Fig. 2 for normal operation in a system with no failing or degrading hardware. A method and system for transparent system service healing of hardware failures and degrading hardware enables direct and efficient exposure of processor hardware events and measurements. Telemetry, in conjunction with an integration interface to a routing information base (RIB) 1112, a forwarding information base (FIB) 510 (Fig. 5), filtering system (FS) 1114 and Internet Protocol Anycast, selectively allows or supresses dynamic routes from a server (compute servers 112, accelerator servers 114, infrastructure servers 116 and utility servers 118), based on a hardware event. A routing information base (RIB) 1112, is a data table that stores routes to particular network destinations.

Dynamic routing is a networking technique that provides optimal data routing. Dynamic routing enables routers to select paths according to real-time logical network layout changes. In dynamic routing, the routing protocol operating on a router is responsible for the creation, maintenance and updating of a dynamic route table. A dynamic route is a process in which network traffic to an endpoint can be forwarded via different routes, based on environment.

A failing component in a server (node) 1100a-e can impact the functionality and performance of one or more applications running on the server (node) 1100a-e. Examples of failing components in a server (node) 1100a-e include a solid-state drive, memory module or a power distribution unit. If a server (node) 1100a-e in the Data Management Platform 100 is degrading, a failing component event is detected by a node failure detector in the filtering system (FS) 1114 and the route associated with the service is withdrawn from the route table 1102. In an embodiment, the route is withdrawn by the router 504 (Fig. 5) for example, Calico in Kubernetes.

In an embodiment, the operating system (OS) 1106 is the Linux operating system. A Border Gateway Protocol (BGP) client on a server (node) 1100a-e reads a routing state from the FIB 510 and distributes it to other BGP clients running on other servers (nodes) 1100a-e. The routes in the FIB 510 are set up by an agent in response to a request to provision connectivity for a particular workload. The BGP client in response to an update to the FIB 510, distributes the updated route(s) to BGP clients running on other servers (nodes) 1100a-e.

In an embodiment, the agent that sets up the routes in the FIB 510 is Felix and the BGP clients are BIRD. BIRD is an open source implementation for routing Internet Protocol packets on Unix-like operating systems. Felix is a per node domain daemon to configure routes and enforce network policies.

The node failure detector in the filtering system 1114 monitors hardware metrics in the node and generates alerts (for example, the failing component event). In an embodiment, the failure or degradation is detected via platform telemetry, the failure/degradation event is communicated to an open collector, for example, "collectd", and then to an event handler that takes corrective action. An example of a corrective action is to remove routes.

In an Internet Protocol Anycast implementation, the route associated with the failing server service is withdrawn, triggering removal of the route from connected peers. Connected peers are all network devices (both servers and switches) in the data-plane network in the Data Management Platform 100. Flows are redirected to healthy or available server nodes 1100a-e transparently.

In the embodiment shown, a rack 106 that includes a plurality of nodes (N) 1110, 5 of N nodes 1110a-1110e are shown. Each node is a physical server that can be a compute server 112, an accelerator server 114, an infrastructure server 116 or a utility server 118. The utility server 118 can also be referred to as a control plane server node that performs management tasks in the Data Management Platform.

In an embodiment, there are upto 16 racks 106 and upto 20 nodes 1110 per rack in a physical cluster 200. In other embodiments there can be more than 16 racks and 20 nodes per rack. There is one utility server 118 per node in the first three racks, one infrastructure server 116 per rack in the second and third rack, upto 14 compute servers 112 per rack 106 in the first three racks 106, upto 16 compute servers in the next 13 racks 106, and upto 4 accelerator servers 114 per rack 106. The accelerator server 114 performs storage processing tasks, and can be referred to as a storage server 400 (Fig. 4).

In an embodiment, each node 1110a-1110e includes a pod 1104 and an operating system (OS) 1106 (for example, a Red Hat Enterprise Linux (RHEL) operating system). A pod 1104 is the basic execution unit of a Kubernetes application, the smallest and simplest unit in the Kubernetes object model that can be created or deployed. The pod 1104 represents a unit of deployment: a single instance of an application in Kubernetes, which can include either a single container or a small number of containers that are tightly coupled and that share resources.

The pod 1104 is a group of one or more containers with shared storage/network. Containers within a pod 1104 share an Internet Protocol (IP) address and port space and can communicate with other pods 1104 other using standard inter-process communications. Containers in different pods 1104 have distinct Internet Protocol addresses and communicate with each other using IP addresses for pods 1104.

Anycast is a network addressing and routing methodology in which a single destination address has multiple routing paths to two or more endpoint destinations. A router 504 selects a path between nodes 1110a-e based on number of hops, distance, lowest cost, latency measurements or based on the least congested route. Under normal operation, each node 1110a-e in the rack 106 advertises the same Internet Protocol (IP) address (Anycast address) for a distributed common service.

Referring to the example shown in Fig. 11, a service is advertised from each of the nodes 1110a-e and the anycast address (IP address) associated with that service is the same across all six nodes 1100a-e. In this example, the IP address "10.1.1.1". Each node 1110a-e has a unique Ethernet address that is stored in a route table 1102 in the data switch 206. The data switch 206 in the rack 106 can also be referred to as a Top of Rack (TOR) switch.

For example, the IP address for node 1100a is '10.1.1.1" and the Ethernet Address for node 1100a is 192.168.1.1. When there are no hardware failures or degradation events, a route table 1102 managed by the orchestrator/scheduler 102 (for example, Kubernetes) allows all routes (via all nodes 1100a-e in the rack 106) to be advertised. The data switch 206 sees a single IP address (10.1.1.1) and six paths (via one of the nodes 1100a-e) to get to the destination. The destination is an application instance. In an embodiment, the application instance is a Kubernetes service. An application can be spawned as multiple application instances to load balance network traffic in the Data Management Platform 100 and provide access to the application and data.

The data switch 206 can use a built-in load balancing method, for example, Equal Cost Multipath routing (ECMP), to select one of the paths to nodes 1100a-e. Equal-cost multi-path routing (ECMP) is a routing strategy where next-hop packet forwarding to a single destination can occur over multiple "best paths" which tie for top place in routing metric calculations. Multi-path routing can be used in conjunction with most routing protocols, because it is a per-hop decision that is limited to a single router.

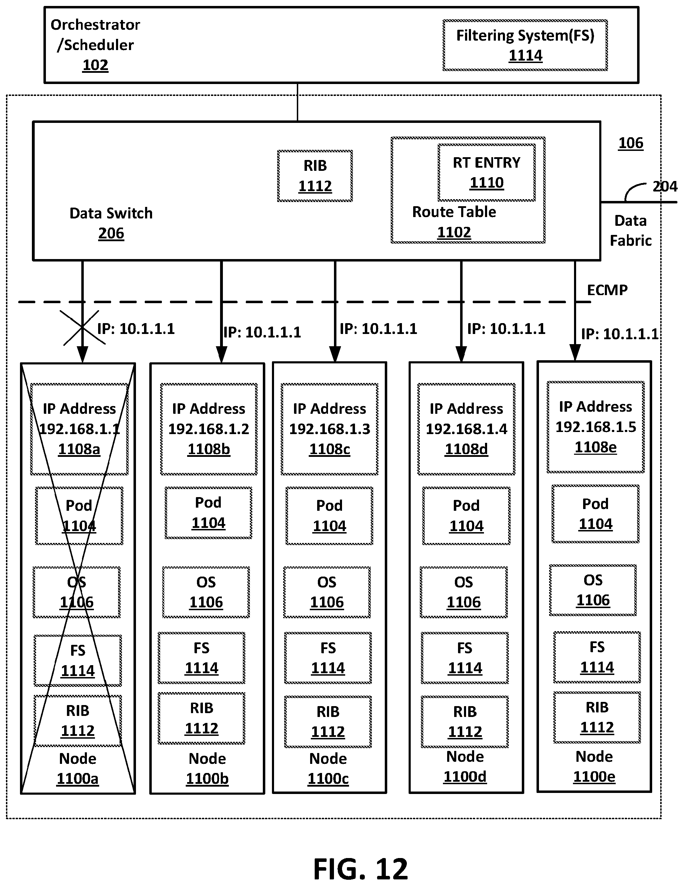

Fig. 12 is a block diagram of an embodiment of a rack 106 in the Data Management Platform 100 in the physical cluster 200 shown in Fig. 2 for degraded operation in a failing system.

During a failure or degradation event (for example, a failed Network Interface Controller 302 in a compute server 112, failed solid-state drive 404 in a storage node 400 or an unstable operating system 1106 in a node 1100a-e), the impacted node 1100a-e suppresses the advertisement of the route associated with the application (also referred to as a service) that is being impacted.

In an embodiment in which the orchestrator/scheduler 102 is Kubernetes, if the failure or degradation event is related to network connectivity, the event is handled by Kubernetes\OpenShift and Kubernetes network component. Kubernetes detects that the node 1100a-e is not available over the network. A network component updates the route table 1102 across the physical cluster 200.

If the failure or degradation event is not related to network connectivity, the event is handled by a Logging Monitoring Alerting (LMA) stack in the pod 1104. An exporter, that is spawned on each node 1100a-e, periodically provides metrics data to the LMA stack. Based on the metrics, the node 1100a-e is marked with additional labels and potentially additional actions can occur. For example, containers that are running on a failed or degraded node 1100a-e can be rescheduled on another node 1100a-e.

As shown in Fig. 12, node 1100a has a degradation or failure event and either suppresses (never advertises) or withdraws the route associated with the impacted service via the route table 1102. In this example, the Anycast address is 10.1.1.1. for each node 1100a-e in the rack 106. The route to node 1100a is withdrawn, for example, node 1100a stops advertising that route and the data switch 206 removes that route from the route table 1102.

Of the six available paths to the Anycast address (10.1.1.1), the path to node 1100a (destination 10.1.1.1, next-hop 192.168.1.1) is removed from the route table 1102 in the data switch 206. The next-hop is the unique Internet Protocol (IP) address associated with the respective node 1100a-e. The AnyCast IP address is the IP address for the application instance or pod 1104 on the respective node 1100a-e. Network traffic is forwarded to the pod 1104 on the node 1100a-e and then to the application instance in the node 1100a-e. All remaining traffic flows are distributed over the remaining paths that are available via the route table 1102 in the data switch 206.

In an embodiment of a system that uses the Linux operating system, during a failure or degradation event, such as a value obtained from raw sensor data (for example, a "critical maximum power match" via the Linux "libsensors" library through the "sysfs" interface), an event action detector and manager in the pod 1104 in the impacted node 1100a-e suppresses the advertisement of the route associated with the Kubernetes service being impacted.

A Kubernetes Service is an abstraction which defines a logical set of pods 1104 running in a cluster 200, that all provide the same functionality. When created, each Kubernetes Service is assigned a unique Internet Protocol (IP) address (also called a clusterIP), which is the route. The assigned IP address is not changed while the Kubernetes Service is alive.

A pod 1104 can be configured to communicate with the Kubernetes Service in the orchestrator/scheduler 102. The communication to the Kubernetes Service is automatically load-balanced to a pod 1104 that is a member of the Kubernetes Service. Multiple nodes can advertise the same service IP, which is referred to as "Anycast". An example of a Kubernetes service is the ClusterIP backing a pod 1104 or a set of pods 1104 hosting applications, for example, NGINX (an open-source, high-performance HTTP server and reverse proxy and an IMAP/POP3 proxy server, Domain Name System (DNS) and Apache(an open-source web server).

After the event has been detected, the event action detector and manager in the pod 1104 in the impacted node 1100a initiates a script to blackhole (suppress and not advertise another path) the route associated with the service on the impacted node 1100a.

When the failed node (in this case node 1100a) is functioning normally again, the failed node automatically advertises the Anycast IP address associated with the previously failed service (10.1.1.1) and is reinserted into the physical cluster 200 transparently. The data switch 206 detects another path for the node 1100a (destination (IP address for the pod) 10.1.1.1, next-hop (IP address for node 1100a) 192.168.1.1) and adds it to its existing route table 1102 as a multi-path destination.

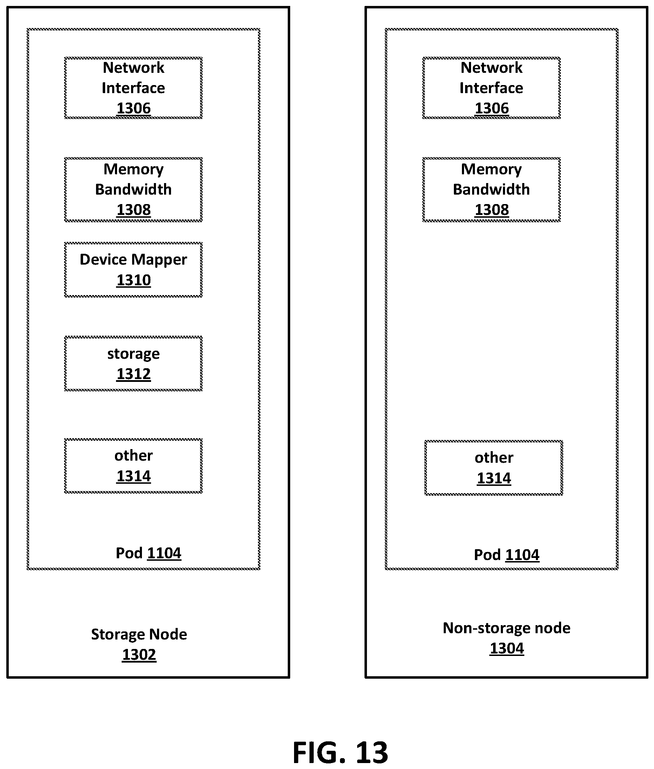

Fig. 13 is a block diagram that illustrates metrics exporters in containers in pod 1104 (Fig. 11) in a node 1100a-e that are used by the Data Management Platform 100 to detect node condition and failures. In the embodiment shown, there are four metrics exporters and other exporters 1314. Each metrics exporter is in a separate container in the pod 1104 (Fig. 11).

A device-mapper exporter 1310 collects low-level metrics from device-mapper volumes. Examples of low-level metrics that are collected from device mapper volumes include average read/write time, average wait time, percentage utilization, queue size, number of writes/reads per second, read/write size per second, reads/writes merged per second.

A storage exporter 1312 collects low-level metrics from solid-state drives. Examples of low-level metrics that are collected include a count of the number of program and erases to the non-volatile memory in the solid-state drive that have failed, and end-to-end error detection count, a cyclic redundancy check (CRC) error count, timed workload timer, thermal throttle status, retry buffer overflow count, wear leveling count, timed workload media wear, timed workload host read/write ratio, power loss imminent (pli)-lock loss count, bytes written to non-volatile memory in the solid-state drive, bytes written by the host to the solid-state drive and system area life remaining.

A memory bandwidth exporter 1308 collects low-level metrics based on a memory bandwidth monitor. A Processor Counter Monitor (PCM) is an application programming interface (API) and a set of tools based on the API to monitor performance and energy metrics of Intel^{®} processors. A memory bandwidth exporter1308 uses the Processor Counter Monitor to collect low-level metrics. Examples of low-level metrics related to memory bandwidth that are collected include channel read/write, memory read/write Mega Bytes per second, read/write, memory and Memory Mega Bytes per second.

A network interface controller 1306 exporter collects low-level metrics from a Network Interface Controller. Examples of low-level metrics that are collected include transmit queue dropped, transmit queue stopped, receive out of buffer, transmit errors, receive buffer passed threshold, and receive/transmit signal integrity.

Other exporters included in the pod 1104 include a server chassis exporter 1316, a node exporter 1318, and a blackbox exporter 1320 . A server chassis exporter 1316 collects low-level metrics from the server chassis. A node exporter 1318 collects operating system level metrics. A blackbox exporter 1320 collects metrics related to Hyper Text Transfer Protocol (HTTP)/ Transmission Control Protocol (TCP) endpoints.

Some exporters (device mapper 1310 and storage 1312) are only used in a storage node 1302, because they are only monitoring metrics on the solid-state drives 404. As shown in Fig. 13, non-storage nodes 1304 (for example, compute servers 112, utility servers 118, infrastructure servers 116 and non-storage accelerator servers 114) do not include the device mapper 1310 and the storage 1312 exporters. Based on metrics from exporters (device mapper, solid-state drive, memory bandwidth and Network Interface Controller) the Data Management Platform 100 can detect and react on such events by redirecting traffic to application instances on healthy nodes.

When all of the nodes in the Data Management Platform cluster 200 are all working correctly, there is no limitation in spawning application(s) instances on multiple nodes. In that case, traffic from the network is working as described in conjunction with Fig. 12. If one of exporters detects a metric that indicates that there is a hardware problem in a node, Logging Monitoring Alerting (LMA) in pods 1104 performs an action to exclude the unhealthy node and block network traffic as described in conjunction with Fig. 13.

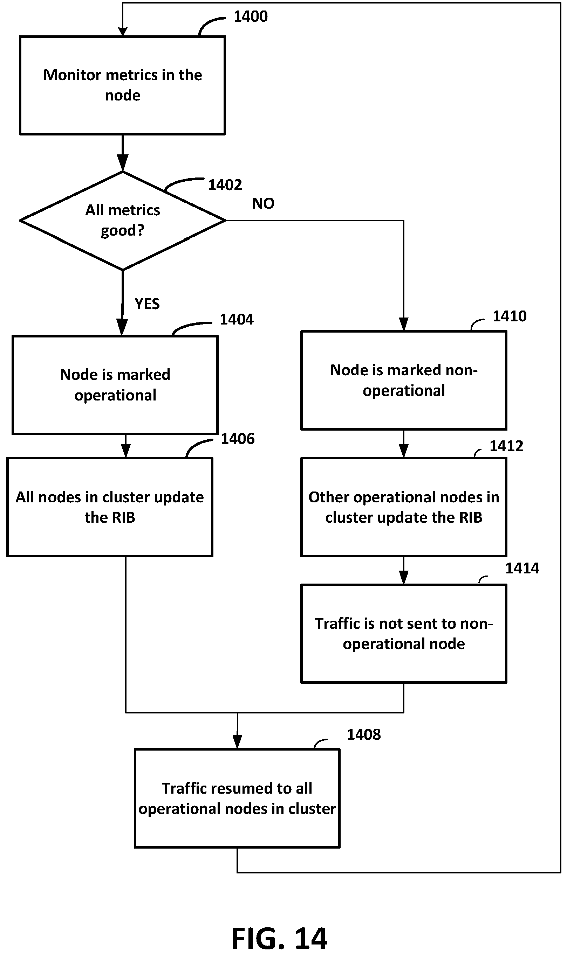

Fig. 14 is a flowgraph illustrating a method for managing hardware failures in the Data Management Platform 100 in the physical cluster 200.

At block 1400, the exporters (network interface exporter 1306, memory bandwidth exporter 1308, device mapper exporter 1310, storage exporter 1312 and other exporters 1314) described in conjunction with Fig. 13 continuously monitor metrics in the node 1100a-e. The LMA in the pod 1104 in the node 1100a-e gathers the metrics from the exporters.

At block 1402, if all metrics gathered from the exporters are good, processing continues with block 1404. If not, processing continues with block 1410.

At block 1404, if the node 1100a-e is operational, the node is marked operational, all metrics are good indicating that the node 1100a-e is operating without errors. If the node has recovered from a non-operational state and had previously been marked non-operational, the node is marked operational.

At block 1406, all nodes 1100a-e in the rack 106 are operational. The RIB 1112 is updated to restore the route to the previously non-operational node 1100a-e and restore traffic to application instance(s) on the recovered node 1100a-e.

At block 1408, traffic is resumed to all application instances on operational nodes 1100a-e in the rack 106. Processing continues with block 1400.

At block 1410, all of the metrics gathered from the exporters are not good indicating a failure or degradation event in the node 1100a-e. The node 1100a-e is marked non-operational. The anycast service advertisement and ECMP forwards accesses to an application via other application instances in other nodes 1100b-e).

At block 1412, the data network is not available to the non-operational node 1100a and access to the application instance on the non-operational node 1100a is not available. The RIB for all nodes in the cluster is updated.

At block 1414, traffic to application instances in operational nodes 1100b-e is resumed to all operational nodes 1100b-e in the rack 106. Traffic to application instances is not sent to the non-operational node 1100a. Processing continues with block 1400.

Current load balancers (software or hardware), along with health checks, scripting or monitoring systems do not dynamically react to exceeded performance thresholds (for example, a Central Processor Unit (CPU) that is exceeding 90% utilization). Monitoring and managing these performance thresholds more closely enables deployments to meet more stringent workload demands including increasingly strict performance service-level agreements (SLAs) to support emerging workloads such as Network Function Virtualization (NFV).

In an embodiment, dynamic and transparent scaling in response to pressure conditions and performance thresholds that provide an indication of performance degradation is on a per-Kubernetes service level based on defined performance thresholds. This allows for dynamic detection and transparent service scaling based on triggered performance thresholds, enabling a more optimized and scalable Kubernetes implementation.

As discussed earlier, the Kubernetes Control Plane is hosted on the Infrastructure Servers 116 and the Kubernetes Host Agent runs on all Compute servers 112 and accelerator servers 114. Direct and efficient exposure of hardware events and measurements, in conjunction with an integration interface to the Routing and Information base (RIB) 1112 is provided. Examples of hardware events and measurements include telemetry, such as raw sensor data that are exposed through the Linux "libsensors" library via a "sysfs" interface. A node is a worker machine in Kubernetes, previously known as a minion. A node may be a virtual machine or physical machine (server), depending on the cluster. Each node contains the services necessary to run pods 1104. The Kubernetes services on a node include the container runtime (software that executes containers and manages container images on a node), kubelet (that runs the pod 1104) and kube-proxy (a network proxy that runs on each node in the cluster, implementing part of the Kubernetes Service that maintains network rules on nodes).

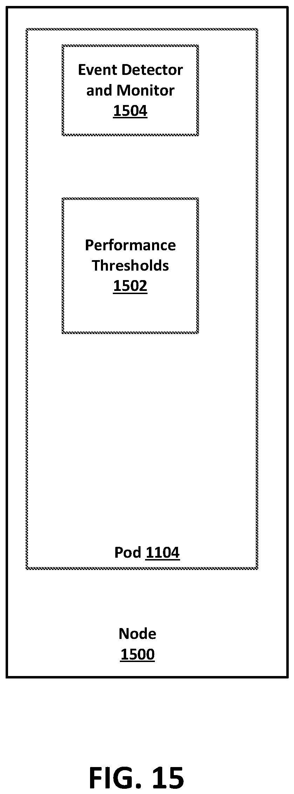

Fig. 15 is a block diagram that illustrates hardware events and measurements in pod 1104 (Fig. 11) in a node 1500 that are used by the Data Management Platform 100 to Monitor and manage performance thresholds 1502 to detect node condition and failures.

Exposure of hardware events and measurements is provided though an event detector and monitor 1504 in the pod 1104 and IP Anycast. The exposure of hardware events and measurements allows for selectively allowing or suppressing dynamic routes from a server (a node in the Data Management Platform 100), based on defined performance thresholds, such as CPU utilization percentage. These thresholds can be set before or during runtime.

Examples of performance thresholds include a percentage of CPU utilization, Input/Output Operations per second IOPS for a solid-state drive 404 or bandwidth utilization. The performance thresholds are associated with a specific Kubernetes service, providing per-Kubernetes-service granularity. After the performance threshold event is detected or a metric is matched, the event detector and monitor 1504 blackholes the route associated with the service on the impacted node.

In networking, black holes refer to places in the network where incoming or outgoing traffic is silently discarded (or "dropped"), without informing the source that the data did not reach its intended recipient. When examining the topology of the network, the black holes themselves are invisible, and can only be detected by monitoring the lost traffic.

A utilization threshold specifies the percentage of the resources over a configured period of time. For example, if the resource is bandwidth of the NVMe interface to the solid-state drive 404, the utilization threshold of the bandwidth can be 75% of maximum bandwidth (for example, 25 Gigabits per second) of an NVMe interface on a solid-state drive 404. If a utilization threshold is met by the filtering system 1114, the route associated with that given service is withdrawn. In an embodiment that uses IP Anycast, the route associated with the failing node service is withdrawn, triggering removal of the route from connected peers. Flows are redirected transparently to nodes that are within the "operating range" transparently.

A triggered utilization threshold specifies the percentage of resources that, when exceeded for a configured period of time, triggers a threshold notification. Each node has a set of routes that the node advertises. The set of routes is visible in the route table 1102 of the node.

If there are no triggered performance thresholds, all active routes are advertised (the default mode of operation). One Anycast IP address is visible to the connected data switch 206, for example, Anycast IP address (10.1.1.1) and five paths via one of the five nodes 1100a-e are available to get to the destination, which in this case is the Kubernetes service. A load balancing method, for example, ECMP can be used to select one of the paths.

During a triggered performance threshold event, the impacted node suppresses the advertisement of the route associated with the service being impacted. The node suppresses the advertisement of the route by blackholing the route associated with the service on the impacted node.

Referring to Fig. 12, node 1100a has a matching performance threshold event and either suppresses (never advertises) or withdraws the route associated with the impacted service. In this example, the address is Anycast IP Address is 10.1.1.1. The route (path) is withdrawn, that is, node 1100a stops advertising a path for Anycast IP Address 10.1.1.1 and the data switch 206 removes the path via node 1100a for Anycast IP Address 10.1.1.1 from the route table 1102. Of the five available paths to that address, the path to node 1100a (destination 10.1.1.1, next-hop of 192.168.1.1) is removed from the route table 1102 in the data switch 206. This removes connections to the impacted node. All remaining traffic flows are distributed over the remaining paths.

After the "performance impacted" node (in this case node 1100a) is functioning normally, node 1100a automatically advertises the next-hop (Ethernet address associated with the previously failed service (destination 10.1.1.1, next-hop of 192.168.1.1). Node 1100a is reinserted into the cluster transparently by removing the previously installed blackhole route associated with the service on node 1100a. The data switch 206 detects the route that was blackholed (that is, suppressed and not advertised another path for that address (destination 10.1.1.1, next-hop of 192.168.1.1) and adds it to the route table 1102 as a multipath destination.

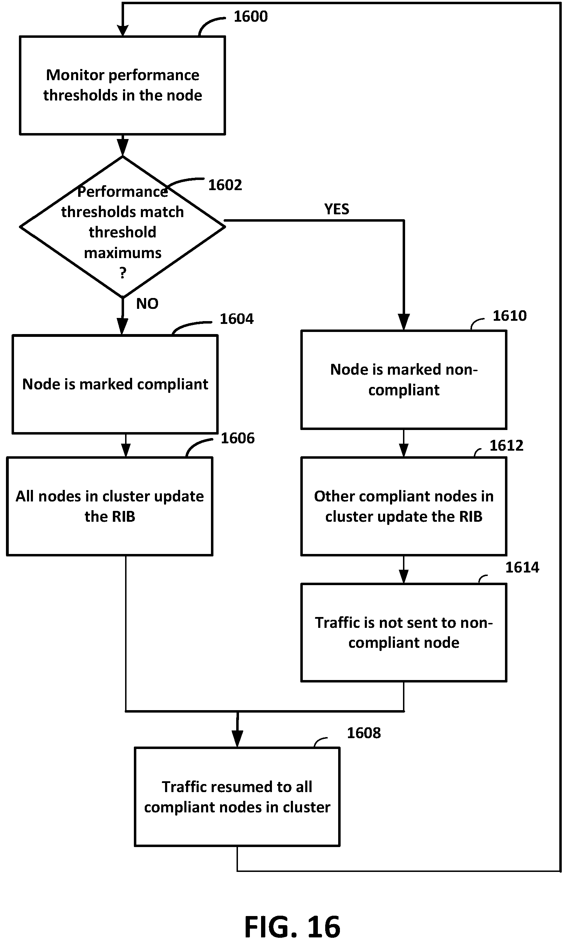

Fig. 16 is a flowgraph illustrating a method implemented in a storage node 400 in the rack 106 to monitor performance of the storage node 400.

At block 1600, the Event Detector and Monitor 1504 described in conjunction with Fig. 15 continuously monitors performance thresholds 1502 in the node.

At block 1602, if performance thresholds do not match predefined threshold maximums, processing continues with block 1604. If they match, processing continues with block 1610.

At block 1604, the node meets Service Level Agreement parameters, the node is marked compliant. If the node had previously been marked non-compliant, the node is marked compliant.

At block 1606, all nodes in cluster are compliant and the Routing Information Base (RIB) is updated to restore the route to the previously non-compliant node to restore traffic to application instance(s) on such node.

At block 1608, traffic is resumed to all application instances on compliant nodes in the cluster. Processing continues with block 1600.

At block 1610, the node does not meet SLA parameters, the node is marked non-compliant.

At block 1612, the data network is not available to the non-compliant node and access to the application instance is not available. The RIB for all nodes in the cluster is updated.

At block 1614, traffic is resumed to all compliant nodes in the cluster. Traffic is not sent to the non-compliant node. Processing continues with block 1600.

Returning to Fig. 2,as discussed earlier, each of the servers (compute servers 112, accelerator servers 114, infrastructure servers 116 and utility servers 118) can also be referred to as a node. The Orchestrator/Scheduler 102 manages a fixed number of nodes. The number of nodes is selected to accommodate peaks in traffic in the data center and are typically overprovisioned. In current data centers, if a workload is under pressure, the orchestrator/scheduler 102 can either throttle workloads or prevent the scheduling of additional workloads on the nodes on which workloads are under pressure which reduces the performance of the datacenter.

Typically, when the load in a data center reaches capacity in terms of CPU, memory or storage, manual data center resizing is performed. Data center resizing involves adding new nodes, provisioning and configuration. Upon decrease in load, the data center is even more overprovisioned.

In an embodiment, the total cost of ownership (TCO) of a data center can be lowered by decreasing over-subscription of resources in data centers. Total Cost of Ownership (TCO) is lowered by monitoring various pressure conditions in an orchestrator managed data center and requesting resizing of existing nodes with additional logical resources.

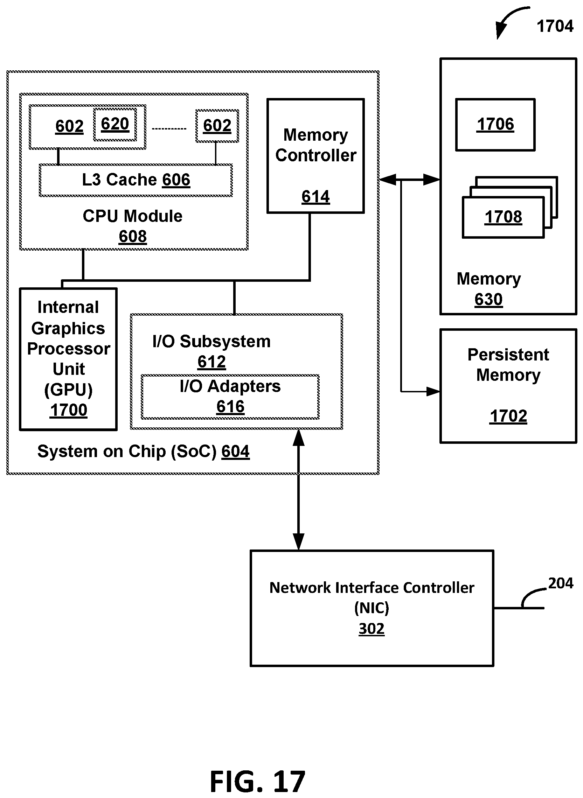

Fig. 17 is a block diagram of an embodiment of a compute node 1704. The compute node 1704 includes a system on chip (SOC or SoC) 604 that combines processor, memory, and Input/Output (I/O) control logic into one SoC package. The SoC 604 includes at least one Central Processing Unit (CPU) module 608 and a memory controller 614.

In the embodiment shown, the SoC 604 also includes an Internal Graphics Processor Unit (GPU) 1700. The internal GPU 1700 can include one or more GPU cores and a GPU cache which can store graphics related data for the GPU core. The GPU core can internally include one or more execution units and one or more instruction and data caches. Additionally, the Internal Graphics Processor Unit (GPU) 1700 can contain other graphics logic units that are not shown in Fig. 17, such as one or more vertex processing units, rasterization units, media processing units, and codecs.

In other embodiments, the memory controller 614 can be external to the SoC 604. The CPU module 608 includes at least one processor core 102 that includes a Level 1(L1) and Level 2 (L2) cache 620, and a level 3 (L2) cache 606 that is shared with other processor cores 102 in the CPU module 608.

In an embodiment, memory 630 is volatile memory. In yet another embodiment, memory 630 includes both byte addressable write-in-place NVM devices and volatile memory devices that can be included on one or more memory modules. A resource manager agent 1706 and workloads 1708 are stored in memory 630.
The compute node 1704 also includes a persistent memory 1702. The persistent memory 1702 can include a byte-addressable write-in-place three dimensional cross point memory device, or other byte addressable write-in-place non-volatile memory devices, or other memory. An example of byte-addressable write-in-place three dimensional cross point memory device is 3DXPoint (for example, Intel^{®} Optane ^{®} and Micron^{®} QuantX^{®}).

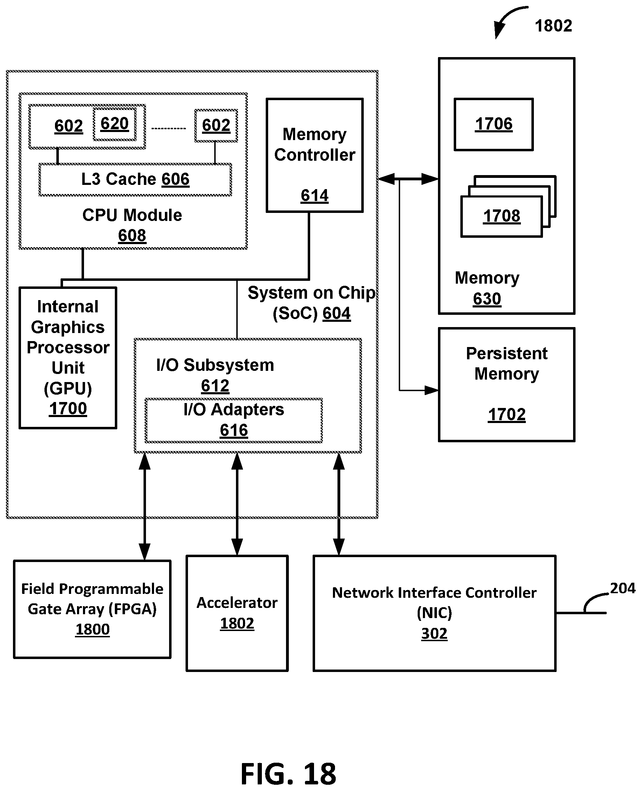

Fig. 18 is a block diagram of another embodiment of a compute node 1804. The compute node 1804 includes a system on chip (SOC or SoC) 604 that combines processor, memory, and Input/Output (I/O) control logic into one SoC package. The SoC 604 includes at least one Central Processing Unit (CPU) module 608 and a memory controller 614.

The compute node 1804 also includes a Field Programmable Gate Array (FPGA) 1800 and an accelerator 1802 that are communicatively coupled to the Input/Output (I/O) subsystem 612 in the SoC 604. In an embodiment, FPGA 1800 is an Intel^{®} Agilex^{®} FPGA Device.

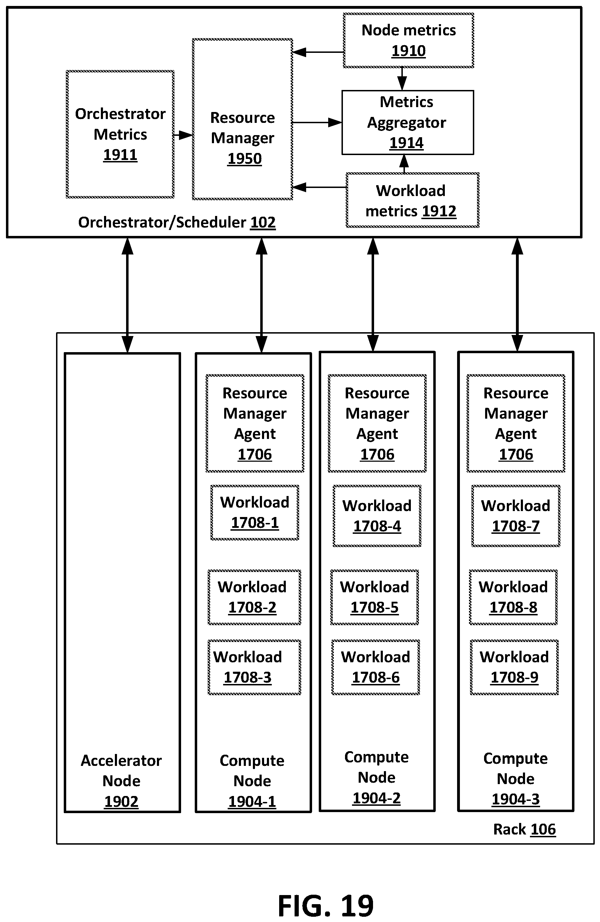

Fig. 19 is a block diagram of an embodiment of a rack 106 in the Data Management Platform 100 in the physical cluster shown in Fig. 2 that includes a resource manager 1950 to automatically add and remove logical resources. The rack 106 includes a plurality of compute nodes 1904-1, 1904-2, 1904-3 and an accelerator node 1902. The compute nodes 1904-1, 1904-2, 1904-3 can include a compute node 1704 an as discussed in conjunction with Fig. 17 or a compute node 1804 as discussed in conjunction with Fig. 18.

The resource manager 1950 monitors metrics to determine when to automatically attach and configure logical resources. In one embodiment, the resource manager 1950 is in the orchestrator/scheduler 102. In other embodiments, the resource manager 1950 is included in one of the compute nodes 1904-1, 1904-2, 1904-3 or in another component in the Data Management Platform 100. The resource manager 1950 has access to the accelerator node 1902 and to all metrics for the Data Management Platform 100. The resource manager 1950 in the Data Management Platform 100 automatically attaches, detaches and configures logical resources (for example, memory, storage volumes, Graphics Processor Unit (GPU), and Field Programmable Gate Array (FPGA) logical resources) without user intervention.

In the particular non-limiting example depicted in Fig. 19, there are three compute nodes 1904-1, 1904-2, 1904-3 and one accelerator node 1902 in the rack 106. The orchestrator/scheduler 102 monitors workloads and processes in each of the compute nodes 1904-1, 1904-2, 1904-3 in the rack 106.

The data management platform 100 includes orchestrator metrics 1911, node metrics 1910 and workload metrics 1912. The orchestration metrics 1911 are managed by the orchestrator/scheduler 102. The workload metrics 1912 are accessible by the resource manager 150. The workload metrics 1912 are exposed by a workload and can be queried by the resource manager 1950 or queried by a metrics aggregator 1914 which in turn is queried by the resource manager 1950. The node metrics 1910 are exposed by a node exporter (for example, github.com/prometheus/node_exporter). The node metrics 1910 can be queried by the resource manager 1950 or queried by a metrics aggregator 1914 which in turn is queried by the resource manager 1950.

The orchestrator/scheduler 102 stores basic node metrics in node metrics 1910. The basic node metrics include: the number of workloads per compute node; the number of processes per compute node; pressure states; CPU utilization per compute node, and memory utilization per compute node. The pressure states indicate whether a compute node 1904 is under pressure.

A compute node 1904 is under pressure if the compute node 1904 is experiencing high resource utilization that is impacting the performance of a workload 1708 running on the compute node 1904. Additional node metrics are monitored and stored in node metrics 1910 to determine if a compute node 1904 is under pressure. The additional node metrics include CPU utilization per process; memory bandwidth utilization per process; memory utilization per process; storage latency per process; storage utilization per process; storage Input/Output per second per process; GPU and/or FPGA utilization per process and GPU and/or FPGA latency per process.

The orchestrator/scheduler 102 also monitors and stores workload metrics 1912. Workload metrics 1912 include: number of clients; average response latency and percentile metrics. Examples of percentile metrics are a 99th percentile latency or a 99.9th percentile latency, that is the maximum latency for 99% or 99.9% of workloads.

The resource manager 1950 aggregates metrics (node metrics 1910, workload metrics 1912 and orchestrator metrics (1911)) to detect a pressure condition when the pressure condition occurs. The resource manager 1950 also aggregates the metrics to detect a pressure condition before the pressure condition occurs. A pressure condition can be detected prior to occurrence of the pressure condition through the use of Time Series Analysis algorithms. Time Series Analysis algorithms include Markov Sequence/Chain algorithms or Artificial Intelligence Algorithms (for example, Neural Networks or Genetic Algorithms). In addition, the resource manager 1950 aggregates the metrics to detect which resources (memory/disk/GPU/FPGA) are under pressure and to request the addition of more resources to one or more of the compute nodes 1904-1, 1904-2, 1904-3.

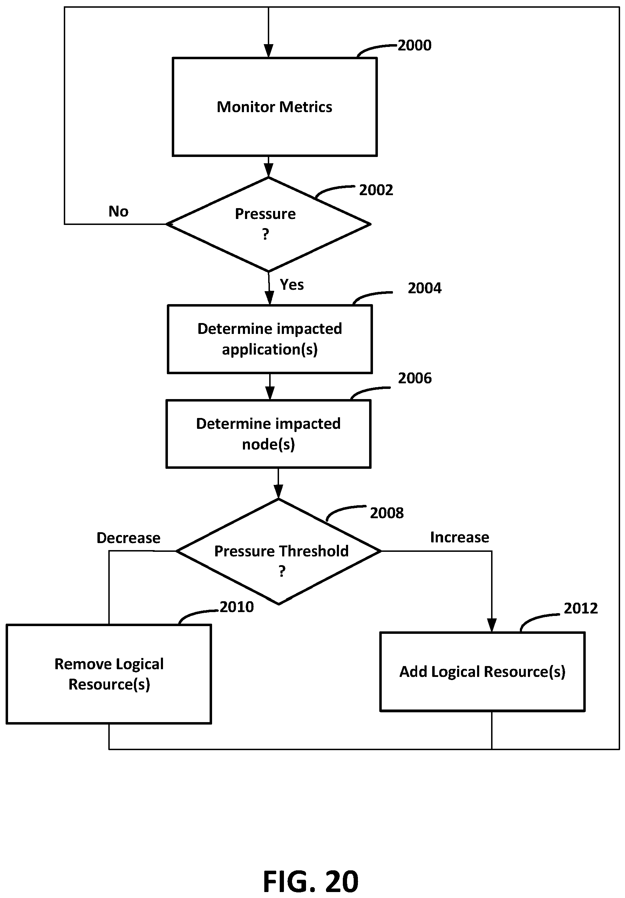

Fig. 20 is a flow graph of a method to automatically add or remove logical resources in response to detection of pressure in the rack 106 in the Data Management Platform 100 shown in Fig. 19.

In general pressure detection is dependent on multiple input sources. Pressure detection can be based on an event that occurs after the fact (post-factum), for example, a 50^{th} percentile, 99th percentile or 99.9th percentile latency spike (a workload metric). Pressure detection can also be based before the fact (pre-factum), that is before a 50^{th} percentile, 99th percentile or 99.9th percentile latency spike is detected based on an increase in resource utilization in the compute nodes 1904-1, 1904-2, 1904-3 and workloads 1708-1, ..., 1708-9.

If pressure detection is post factum, the orchestrator metrics 1911 and node metrics 1910 are used to detect the compute node 1904-1, 1904-2, 1904-3 and the resource associated with the pressure detection. If pressure detection is pre-factum, a prediction is made that there will be pressure based on an increase in resource utilization in the nodes 1904-1, 1904-2, 1904-3 and workloads 1708-1, ..., 1708-9.

At block 2000, the resource manager 1950 monitors system metrics. The monitored system metrics include orchestrator metrics 1911, node metrics 1910 and workload metrics 1912.

At block 2002, a pressure condition occurs if a compute node 1904-1, 1904-2, 1904-3 is under stress. While monitoring the system metrics, the resource manager 1950 can detect whether the status of a pressure condition is active or non-active. The pressure condition is active if a pressure condition is about to happen, the pressure condition is about to end or the pressure condition is in process. If an active pressure condition is detected by the resource manager 1950, processing continues with block 2004. If not, processing continues with block 2000 to continue to monitor metrics.

At block 2004, an active pressure condition has been detected. An example of a pressure condition is a 99th percentile latency or a 99.9th percentile latency spike (a workload metric). The applications running on the compute nodes 1904-1, 1904-2, 1904-3 that are impacted by the active pressure condition are determined. Processing continues with block 2006.

At block 2006, the compute nodes 1904-1, 1904-2, 1904-3 that are impacted by the active pressure condition are determined.

At block 2008, the detected active pressure condition can be if a pressure condition is about to happen, about to end or is in process. If the pressure condition is about to happen or is in process, processing continues with block 2012. If the pressure condition is about to end, processing continues with block 2010.

At block 2010, the pressure condition is about to end, logical resources are removed from the compute node 1904-1, 1904-2, 1904-3. Processing continues with block 2000 to continue to monitor metrics.

At block 2012, the pressure condition is about to happen or is in process, logical resources are added to the compute node 1904-1, 1904-2, 1904-3. In an embodiment, more logical resources are added to the compute node 1904-1, 1904-2, 1904-3 that is experiencing the pressure condition. Additional logical resources can be used by all workloads 1708 on the compute node 1904-1, 1904-2, 1904-3 or can be restricted for usage only by specific workloads 1708 on the compute node 1904-1, 1904-2, 1904-3. Logical resources that can be added to relieve pressure include storage, memory, accelerator and Field Programmable Gate Array (FPGA) resources.

A pressure condition for a disk (for example, solid-state drive 404 (Fig. 4)) can be due to a lack of space on the disk or an increased Input/Output latency to the disk. Upon detecting a pressure condition (post-factum or pre-factum) for the disk, the Resource Manager 1905 requests that the accelerator node 1902 create a new volume and logically attach the newly created volume to the respective compute node 1904-1, 1904-2, 1904-3 3. The Resource Manager Agent 1706 in the respective compute node 1904-1, 1904-2, 1904-3 performs a file system extension on the newly created volume and mounts the newly created volume directly for the running workload 1708 on one of the compute nodes 1904-1, 1904-2, 1904-3.

A pressure condition for memory (for example, memory 630 or persistent memory 1702 (Fig. 17)) can be due to high memory bandwith usage, low free memory on the compute node 1904-1,1904-2, 1904-3 or a memory usage spike in a workload 1708 on the compute node 1904-1, 1904-2, 1904-3. The resource manager 1950 can use the persistent memory 1702 (Fig. 17), a Simple Storage Service (S3) endpoint or a remote solid-state drive 404 in a storage node 400 to allocate a new pool of memory for the compute node 1904-1, 1904-2, 1904-3. The Simple Storage Service can be accessed via the network interface controller 302 in the compute node 1904-1,1904-2, 1904-3. The Simple Storage Service uses multiple remote drives accessible via the Network Interface Controller 302 to present one endpoint. Simple Storage Service is an Application Programming Interface (API) that provides object storage through a web service interface. Amazon^{®} Simple Storage Service Simple Storage Service is the de facto standard in object storage solutions. Examples of interfaces that are compatible with Amazon Simple Storage Service include Ceph RADOS Gateway, OpenIO, Scality and MinIO. In an embodiment, the Simple Storage Service is provided by MinIO. The remote solid-state drive 404 is in the storage node 400 in the same rack 106 as the compute node 1904-1,1904-2, 1904-3 and workload 1708.

The new pool of memory is accesible for utilization by the compute node 1904-1,1904-2, 1904-3 via the Resource Manager Agent 1706. The Resource Manager Agent 1706 maps the new pool of memory as an extension of the memory already allocated to the compute node 1904-1,1904-2, 1904-3. The new pool of memory allocated in persistent memory 1702 is accessible directly by the workload 1708. The new pool of memory allocated by Simple Storage Service is exposed to the workload 1708 via a kernel function (for example, a 'userfaultfd') function that allows on-demand paging from user space 500.

The newly allocated pool of memory in the persistent memory 1702 or remote solid-state drive 404 is used as a warm tier of logical memory and memory 630 includes volatile memory and is a cache for the warm tier of logical memory. Local memory 630 is a hot tier of logical memory with low latency and high bandwidth. The persistent memory 1702 has a greater capacity than memory 630 and has a greater latency and lower bandwidth. The solid-state drive 302 has greater capacity that the persistent memory 1702 and has a greater latency and lower bandwidth.

A pressure condition for the accelerator 1802 or FPGA 1800 results in the workload 1708 being impacted by lack of sufficient resources of the accelerator 1802 or FPGA 1800. A job queue for resources of the accelerator 1802 or FPGA 1800 that is used by one or more workloads 1708 can fill during a pressure condition.

In an embodiment, the resource manager 1850 detects a percentile latency increase due to a stall in CPU processing. For example, if the requested data is not in the CPU cache, the requested data must be fetched from far memory or storage. This results in variability in the average response time (that is, deviations from the mean). In response to the detection of the latency increase, the resource manager 1850 requests a new accelerator server or a FPGA resource from the storage node 404 using Remote Direct Memory Access (RDMA) based communication protocols.

Examples of RDMA based communication protocols include NVMeOF (NVM Express over Fabric) or to a FPGA resource over Fabric (for example, an FPGA that is accessible using RDMA over Fabric). NVM Express over Fabrics defines a common architecture that supports a range of storage networking fabrics for NVMe block storage protocol over a storage networking fabric. This includes enabling a front-side interface into storage systems, scaling out to large numbers of NVMe devices and extending the distance within a datacenter over which NVMe devices and NVMe subsystems can be accessed.

The new logical accelerator or FPGA is connected to one of the compute nodes 1904-1,1904-2, 1904-3, and used by the workload 1708. Processing continues with block 2000 to continue to monitor metrics.

### Storage Layer self-healing

A shared-nothing architecture (SN) is a distributed-computing architecture in which an update request is satisfied by a single node. The node can be a compute node, a memory node or a storage node. The intent is to eliminate contention among nodes. Each node independently accesses memory and storage. Nodes do not share memory or storage.

A shared-nothing architecture system can scale by adding nodes because there is no central resource that bottlenecks the system. Another term for a shared-nothing architecture is sharding. A database shard is a horizontal partition of data in a database or search engine. Each individual partition is referred to as a shard or database shard. Each shard is stored in a separate database server instance, to spread load.

Distributed applications that are used in a system with a shared-nothing architecture need their shard stored in a database server instance to be persistent. Examples of distributed applications with a shared-nothing architecture include Structured Query Language (SQL) databases, Simple Storage Service (S3) Object Store and Time Series Databases. Structured Query Language is a domain-specific language used in programming and designed for managing data stored in a relational database management system (RDBMS), or for stream processing in a relational data stream management system (RDSMS).

Failure of a database server instance, or group of database server instances impacts the users of the database server. The failure can result in an increase in the latency of a request for data stored in a database server instance or a failed request for data stored in the database server instance. Additionally, recovery from the failure is time and resource consuming because the data associated with the failed database server instance or group of database server instances has to be restored.

Manual intervention is required to perform the restoration of the database server instances with knowledge of application topology and failure domains in which the application is deployed. In a scale-out architecture the application is composed of several processes, each running in a Kubernetes pod. These pods are distributed across fault domains, that is, racks in a Data Management Platform 100, such that a failure does not impact the application's availability or the durability of the data the application is managing. The distribution of these pods is the application topology.

In an embodiment, a storage self-healing mechanism that may also referred to as storage self-healing logic or circuitry monitors a storage sub-system and monitors workloads that use the storage sub-system (storage nodes and solid-state drives) to ensure that all the workloads are spread across available failure domains.

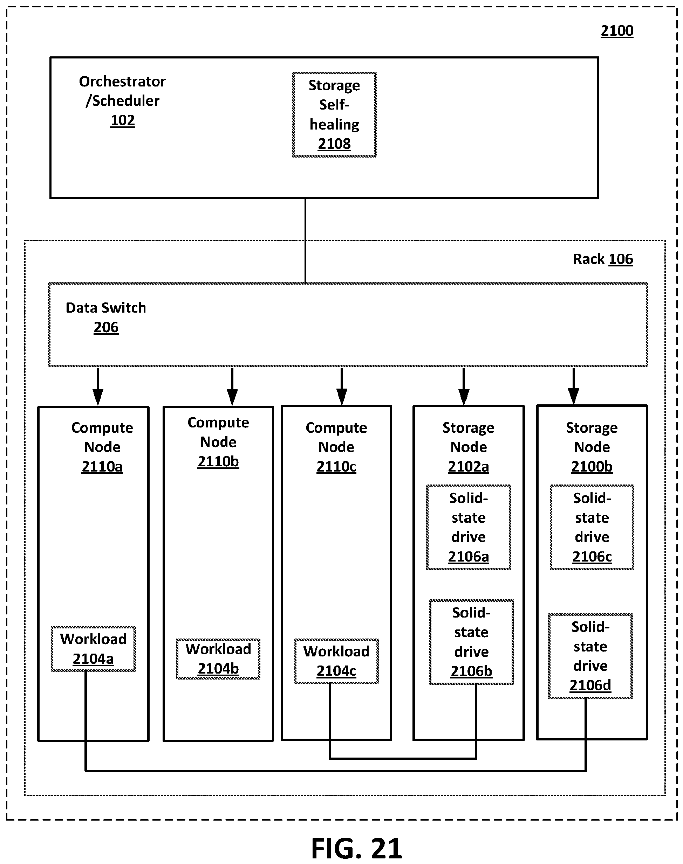

Fig. 21 is a block diagram of an embodiment of a physical cluster 2100 in the Data Management Platform 100 that includes a storage self-healing mechanism 2108. The physical cluster 2100 includes an orchestrator/scheduler 102 and a rack 106. In an embodiment, the storage self-healing mechanism 2108 is in the orchestrator/scheduler 102. In other embodiments, the storage self-healing mechanism may be in another component of the Data Management Platform 100.

In the particular non-limiting example depicted in Fig. 21, there is one rack 106 with one data switch 206, three compute nodes 2110a-c and two storage nodes 2102a-b. The compute nodes 2110a-b and storage nodes 2102a-b are communicatively coupled to the data switch 206.

The physical cluster 2100 has a plurality of failure domains for an application that uses the storage sub-system (storage nodes 2102a-b and solid-state drives 2106a-d). A first failure domain is the data switch 206, a second failure domain is a compute node 21000a-b in which a workload 2104a-c runs, a third failure domain in a storage node 2102a-b and a fourth failure domain in a solid-state drive 2106a-b.

The storage self-healing mechanism 2108 periodically performs a health check for each of the plurality of failure domains. One of the health checks performed by the storage self-healing mechanism for the data switch 206 is to determine if the orchestrator/scheduler 102 can access the data switch 206. In an embodiment Internet Control Message Protocol (ICMP) can be used to determine if the orchestrator 102 can access the data switch. For example, ICMP echo request/reply or extended echo request/reply messages can be used to determine if the orchestrator/scheduler 102 can access the data switch 206. Internet Control Message Protocol is an error reporting protocol and is an extension to the Internet Protocol (IP) defined by Request for Comments (RFC) 792.

Another health check performed by the storage self-healing mechanism 2108 for the data switch 206 is to determine if routes are available in the data switch. In an embodiment, an "ip r g" command (a Linux utility command) checks if the routes to the compute node 2100a-c or storage node 2102a-b that is bound to the specified IP address are visible and routes to the pod are visible.

One of the health checks performed for the compute node 2100a-c or storage node 2102a-b by the storage self-healing mechanism 2108 is to determine if the compute node 2110a-c or storage node 2102a-b is reachable via the data switch 206. In an embodiment Internet Control Message Protocol (ICMP) can be used to determine if the compute node 2110a-c or storage node 2102a-b can access the data switch.

Another health check for the compute node 2110a-c or storage node 2102a-b performed by the storage self-healing mechanism 2108 is to check if the orchestrator 102 reports the compute node 2110a-c or storage node 2102a-b as ready. The orchestrator 102 checks the health of the compute node 2110a-c or storage node 2102a-b and reports if the respective the compute node 2110a-c or storage node n is ready to accept workloads. The health of the compute node 2110a-c or storage node 2102a-b can include memory and CPU checks from the operating system perspective and network connectivity between the orchestrator and the respective compute node 2110a-c or storage node 2102a-b.

One of the health checks performed for the solid-state drive 2106a-d performed by the storage self-healing mechanism 2108 is write amplification. For example, write amplification factors such as free user space and overprovisioning can be used to predict a failure in the solid-state drive 2106a-d. Another health check for the solid-state drive 2106a-d performed by the storage self-healing mechanism 2108 is to check the health of the solid-state drive 2106a-d.

The health of the solid-state drive 2106a-d can be monitored using S.M.A.R.T. (Self-Monitoring, Analysis and Reporting Technology. S.M.A.R.T is a monitoring system included in solid-state drives that monitors and reports indicators of reliability of the solid-state drive that can be used to take preventative action to prevent data loss. Examples of S.M.A.R.T metrics for a NAND based solid-state drive 2106a-d include Program Fail Count, Erase Fail Count, Wear Leveling Count, End-to-End Error Detection Count, Cyclic Redundancy Code (CRC) Error Count, Timed Workload - Media Wear, Timed Workload - Host, Read/Write Ratio, Timed Workload Timer, Thermal Throttle Status, Retry Buffer Overflow Count, PLI Lock Loss Count, NAND Bytes Written, Host Bytes Written and System Area Life Remaining

In a scale-out, shared nothing architecture a workload has multiple instances. A minimum number of accepted failed instances is workload specific. Simple Storage Service protects data against hardware failures and silent data corruption using erasure code and checksums.

Erasure code is a mathematical algorithm to reconstruct missing or corrupted data. Simple Storage Service shards objects into data and parity blocks. With 8 data blocks and 4 parity blocks allows data to be recovered if there are upto 4 instance failures. A database having 3 replicas (copies of the database) allows up to 2 instances to recover the data.

The self-healing mechanism 2108 can detect incoming failures, and can trigger and schedule recreation of data stored on failed solid-state drives 2106a-d. The storage self-healing mechanism 2108 can use the metrics obtained via the health checks described earlier to trigger automatic actions for the storage subsystem (storage nodes 2102a-b and solid-state drives 2106a-d.

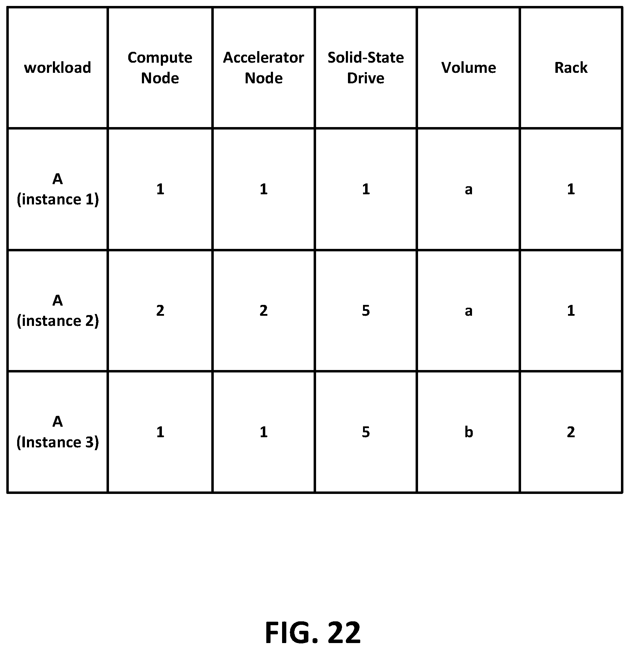

Fig. 22 illustrates an embodiment of mapping of workloads in the cluster 2100 shown in Fig. 21. The storage self-healing mechanism 2108 tracks the mapping of workloads 2104a-c to the storage subsystem. For example, the mapping tracks the solid-state drive 2106a-d to which a logical volume is mapped.

As shown in Fig. 22, workload A (instance 1) is mapped to compute 1, accelerator 1, solid-state drive 1, volume a in rack 1.

In a system that includes the storage self-healing mechanism 2108, there is no administrator/operator involvement required for recovery of the application. Also, latency and bandwidth impact of failing clustered application instances of overall system performance is reduced.

Upon detecting a failure in the data switch 206 or a failure related to all of the storage nodes 2102a-b and compute nodes 2110a-c in the rack 106, multiple workloads are impacted. The storage self-healing mechanism 2108 detects the workloads that are impacted by the failure. Another rack 106 is selected from available racks in the physical cluster 2100. The storage self-healing mechanism 2108 in the orchestrator 102 via the NVMe over Fabric interface disconnects the volume on the solid-state drive and removes the volume from the failed compute nodes and storage nodes.

Resources for the workload that was running on the compute node in the failed rack are created in the other rack. The workload is rescheduled to run on a compute node in the other rack. After the rescheduled workload instances have been rescheduled, the storage self-healing mechanism 2108 in the orchestrator 102 triggers a workload "repair/heal" mechanism in the workload for all of the data on the volume in the other rack after the storage has been recreated in the other rack and repairs blocks upon detecting an error in the respective block.

If the storage self-healing mechanism 2108 detects a failure in a compute node or the compute node reports a failure, the storage self-healing mechanism 2108 detects which workloads are impacted on the failed compute node. The impacted Workload(s) are rescheduled to run on another compute node within the same rack, that does not already host an instance of the workload. The storage self-healing mechanism 2108 in the orchestrator 102 requests a disconnect of the volume from the failed compute node and a connect of the volume to the other compute node. In an embodiment in which the communications path between the solid-state drive and the storage node is via NVMeOF, the requests to disconnect and connect are sent via the NVMeOF interface. After the workload instances have been restarted on the other compute node, the orchestrator 102 triggers a workload "repair/heal" mechanism on all of the data on the volume and repairs any blocks upon error.

If a failure in a storage node 2102a-b that impacts multiple workloads and data on the solid-state drives cannot be recovered, the storage self-healing mechanism 2108 in the orchestrator 102 determines the impacted workloads and the volumes used in the failed storage node. The storage self-healing mechanism 2108 reschedules all impacted workloads onto different compute nodes 2110a-c within the rack 102, creates new volumes on a solid-state drive in another storage node 2100a-b and connects the new volumes on the solid-state drive to the new compute nodes 2110a-c via the NVMeOF interface.

If the compute nodes 2110a-c in the in rack 106 already host workload(s) of the same type, the orchestrator 102 selects another rack 106 in the physical cluster 2100 and the orchestrator 102 reschedules all impacted workloads to run on compute nodes 2100a-c in the other rack 102. The orchestrator 102 creates new volumes on a solid-state drive in another storage node 2100a-b in the other rack 106 and connects to the new compute nodes 2110a-c in the other rack 106 via the NVMeOF interface. After the workload instances have been restarted on the other compute node, the orchestrator 102 triggers a workload "repair/heal" mechanism on all the data on the volume and repairs any blocks upon error.

Upon failure of one/or multiple solid-state drives in the storage nodes 2102a-d, multiple workloads are impacted. The storage self-healing mechanism 2108 determines the workloads that are impacted, that is, the workloads that are using logical volumes on the failed solid-state drive. The storage self-healing mechanism 2108 creates new volumes on other operational solid-state drives within the same storage node 2102a-b or in another storage node 2102a-b within the same rack 106. New volumes are connected via the NVMeOF interface to the compute nodes, old volumes are disconnected. After the workload instances have been restarted on the other compute node, the orchestrator 102 triggers a workload "repair/heal" mechanism on all the data on the volume and repairs any blocks upon error.

Flow diagrams as illustrated herein provide examples of sequences of various process actions. The flow diagrams can indicate operations to be executed by a software or firmware routine, as well as physical operations. In one embodiment, a flow diagram can illustrate the state of a finite state machine (FSM), which can be implemented in hardware and/or software. Although shown in a particular sequence or order, unless otherwise specified, the order of the actions can be modified. Thus, the illustrated embodiments should be understood as an example, and the process can be performed in a different order, and some actions can be performed in parallel. Additionally, one or more actions can be omitted in various embodiments; thus, not all actions are required in every embodiment. Other process flows are possible.

To the extent various operations or functions are described herein, they can be described or defined as software code, instructions, configuration, and/or data. The content can be directly executable ("object" or "executable" form), source code, or difference code ("delta" or "patch" code). The software content of the embodiments described herein can be provided via an article of manufacture with the content stored thereon, or via a method of operating a communication interface to send data via the communication interface. A machine readable storage medium can cause a machine to perform the functions or operations described, and includes any mechanism that stores information in a form accessible by a machine (e.g., computing device, electronic system, etc.), such as recordable/non-recordable media (e.g., read only memory (ROM), random access memory (RAM), magnetic disk storage media, optical storage media, flash memory devices, etc.). A communication interface includes any mechanism that interfaces to any of a hardwired, wireless, optical, etc., medium to communicate to another device, such as a memory bus interface, a processor bus interface, an Internet connection, a disk controller, etc. The communication interface can be configured by providing configuration parameters and/or sending signals to prepare the communication interface to provide a data signal describing the software content. The communication interface can be accessed via one or more commands or signals sent to the communication interface.

Various components described herein can be a means for performing the operations or functions described. Each component described herein includes software, hardware, or a combination of these. The components can be implemented as software modules, hardware modules, special-purpose hardware (e.g., application specific hardware, application specific integrated circuits (ASICs), digital signal processors (DSPs), etc.), embedded controllers, hardwired circuitry, etc.

Besides what is described herein, various modifications can be made to the disclosed embodiments and implementations of the invention without departing from their scope.

Therefore, the illustrations and examples herein should be construed in an illustrative, and not a restrictive sense. The scope of the invention should be measured solely by reference to the claims that follow.

## Claims

1. An apparatus comprising:
a compute server (112); and
a storage server (400) to manage a plurality of storage devices communicatively coupled to the storage server, the compute server and the storage server communicatively coupled via a network, the plurality of storage devices managed by the storage server disaggregated from the compute server to enable storage capacity of the plurality of storage devices to scale independent of the compute server; **characterized by** the storage server further comprising:
a network interface controller (302) communicatively coupled to the network; and
a system-on-chip (306, 604), the system-on-chip comprising a plurality of cores and a last level cache memory, the plurality of cores communicatively coupled to the last level cache memory, the last level cache memory comprising a plurality of cache ways, a portion of the plurality of cache ways allocated for exclusive use by a logical volume in the plurality of storage devices and the network interface controller being configured to transfer data between the logical volume and the plurality of cache ways.

2. The apparatus of Claim 1, wherein the portion of the plurality of cache ways is allocated during initialization.

3. The apparatus of Claim 2, wherein the logical volume stores data for use by the compute server.

4. The apparatus of Claim 3, wherein the data transferred between the logical volume and the plurality of cache ways in the last level cache is transferred between the storage server and the compute server via the network communicatively coupled to the network interface controller.

5. The apparatus of Claim 1, wherein at least one of the plurality of cores allocated for exclusive use by a logical volume in the plurality of storage devices and the network interface controller to transfer data between the logical volume and the network interface controller.

6. The apparatus of Claim 1, further comprising an external memory coupled to the system-on-Chip, the external memory to temporarily store data to be transferred between the logical volume and the network interface when all of the plurality of cache ways in the portion of last level cache allocated for exclusive use by the logical volume and the network interface controller store data to be transferred.

7. A method comprising:
managing, by a storage server (400), a plurality of storage devices communicatively coupled to the storage server; and
communicatively coupling via a network, the storage server with a compute server (112), the plurality of storage devices managed by the storage server disaggregated from the compute server to enable storage capacity of the plurality of storage devices to scale independent of the compute server; **characterized in that** the storage server comprises:
a network interface controller (302) communicatively coupled to the network; and
a system-on-chip (306, 604), the system-on-chip comprising a plurality of cores and a last level cache memory, the plurality of cores communicatively coupled to the last level cache memory, the last level cache memory comprising a plurality of cache ways, a portion of the plurality of cache ways allocated for exclusive use by a logical volume in the plurality of storage devices and the network interface controller to transfer data between the logical volume and the plurality of cache ways.

8. The method of Claim 7, wherein the portion of the plurality of cache ways is allocated during initialization.

9. The method of Claim 8, wherein the logical volume stores data for use by the compute server.

10. The method of Claim 9, wherein the data transferred between the logical volume and the plurality of cache ways in the last level cache is transferred between the storage server and the compute server via the network communicatively coupled to the network interface controller.

11. The method of Claim 7, wherein at least one of the plurality of cores allocated for exclusive use by a logical volume in the plurality of storage devices and the network interface controller to transfer data between the logical volume and the network interface controller.

12. The method of Claim 7, further comprising an external memory coupled to the system-on-Chip, the external memory to temporarily store data to be transferred between the logical volume and the network interface when all of the plurality of cache ways in the portion of last level cache allocated for exclusive use by the logical volume and the network interface controller store data to be transferred.

13. At least one machine readable medium comprising a plurality of instructions that in response to being executed by a system cause the system to carry out a method according to any one of claims 7 to 12.

## Patentansprüche

1. Einrichtung, umfassend:
einen Rechenserver (112); und
einen Speicherserver (400) zum Verwalten einer Mehrzahl von Speichervorrichtungen, die kommunikativ mit dem Speicherserver gekoppelt ist, wobei der Rechenserver und der Speicherserver über ein Netzwerk kommunikativ gekoppelt sind, wobei die Mehrzahl von Speichervorrichtungen vom Speicherserver verwaltet wird und von dem Rechenserver getrennt ist, um zu ermöglichen, dass Speicherkapazität der Mehrzahl von Speichervorrichtungen unabhängig von dem Rechenserver skaliert wird; **dadurch gekennzeichnet, dass** der Speicherserver ferner Folgendes umfasst:
eine Netzwerkschnittstellensteuerung (302), die kommunikativ mit dem Netzwerk gekoppelt ist; und
einen System-on-Chip (306, 604), wobei der System-on-Chip eine Mehrzahl von Kernen und einen Last-Level-Cache-Speicher umfasst, die Mehrzahl von Kernen kommunikativ mit dem Last-Level-Cache-Speicher gekoppelt ist, der Last-Level-Cache-Speicher eine Mehrzahl von Cache-Wegen umfasst, ein Teil der Mehrzahl von Cache-Wegen zur ausschließlichen Verwendung durch ein logisches Volume in der Mehrzahl von Speichervorrichtungen zugewiesen ist und die Netzwerkschnittstellensteuerung dazu ausgelegt ist, Daten zwischen dem logischen Volume und der Mehrzahl von Cache-Wegen zu übertragen.

2. Einrichtung nach Anspruch 1, wobei der Teil der Mehrzahl von Cache-Wegen während der Initialisierung zugewiesen wird.

3. Einrichtung nach Anspruch 2, wobei das logische Volume Daten zur Verwendung durch den Rechenserver speichert.

4. Einrichtung nach Anspruch 3, wobei die Daten, die zwischen dem logischen Volume und der Mehrzahl von Cache-Wegen in dem Last-Level-Cache übertragen werden, zwischen dem Speicherserver und dem Rechenserver über das Netzwerk übertragen werden, das kommunikativ mit der Netzwerkschnittstellensteuerung gekoppelt ist.

5. Einrichtung nach Anspruch 1, wobei mindestens einer der Mehrzahl von Kernen zur ausschließlichen Verwendung durch ein logisches Volume in der Mehrzahl von Speichervorrichtungen und die Netzwerkschnittstellensteuerung zugewiesen ist, um Daten zwischen dem logischen Volume und der Netzwerkschnittstellensteuerung zu übertragen.

6. Einrichtung nach Anspruch 1, ferner umfassend einen externen Speicher, der mit dem System-on-Chip gekoppelt ist, wobei der externe Speicher zwischen dem logischen Volume und der Netzwerkschnittstelle zu übertragende Daten temporär speichert, wenn alle der Mehrzahl von Cache-Wegen in dem Teil des Last-Level-Caches, der zur ausschließlichen Verwendung durch das logische Volume und die Netzwerkschnittstellensteuerung zugewiesen ist, zu übertragende Daten speichern.

7. Verfahren, umfassend:
Verwalten einer Mehrzahl von Speichervorrichtungen, die kommunikativ mit einem Speicherserver gekoppelt ist, durch einen Speicherserver (400); und
kommunikatives Koppeln des Speicherservers über ein Netzwerk mit einem Rechenserver (112), wobei die Mehrzahl von Speichervorrichtungen, die von dem Speicherserver verwaltet wird, von dem Rechenserver getrennt ist, um zu ermöglichen, dass Speicherkapazität der Mehrzahl von Speichervorrichtungen unabhängig von dem Rechenserver skaliert wird; **dadurch gekennzeichnet, dass** der Speicherserver Folgendes umfasst:
eine Netzwerkschnittstellensteuerung (302), die kommunikativ mit dem Netzwerk gekoppelt ist; und
einen System-on-Chip (306, 604), wobei der System-on-Chip eine Mehrzahl von Kernen und einen Last-Level-Cache-Speicher umfasst, die Mehrzahl von Kernen kommunikativ mit dem Last-Level-Cache-Speicher gekoppelt ist, der Last-Level-Cache-Speicher eine Mehrzahl von Cache-Wegen umfasst, ein Teil der Mehrzahl von Cache-Wegen zur ausschließlichen Verwendung durch ein logisches Volume in der Mehrzahl von Speichervorrichtungen zugewiesen ist und die Netzwerkschnittstellensteuerung Daten zwischen dem logischen Volume und der Mehrzahl von Cache-Wegen zu überträgen.

8. Verfahren nach Anspruch 7, wobei der Teil der Mehrzahl von Cache-Wegen während der Initialisierung zugewiesen wird.

9. Verfahren nach Anspruch 8, wobei das logische Volume Daten zur Verwendung durch den Rechenserver speichert.

10. Verfahren nach Anspruch 9, wobei die Daten, die zwischen dem logischen Volume und der Mehrzahl von Cache-Wegen in dem Last-Level-Cache übertragen werden, zwischen dem Speicherserver und dem Rechenserver über das Netzwerk übertragen werden, das kommunikativ mit der Netzwerkschnittstellensteuerung gekoppelt ist.

11. Verfahren nach Anspruch 7, wobei mindestens einer der Mehrzahl von Kernen zur ausschließlichen Verwendung durch ein logisches Volume in der Mehrzahl von Speichervorrichtungen und die Netzwerkschnittstellensteuerung zugewiesen wird, um Daten zwischen dem logischen Volume und der Netzwerkschnittstellensteuerung zu übertragen.

12. Verfahren nach Anspruch 7, ferner umfassend einen externen Speicher, der mit dem System-on-Chip gekoppelt ist, wobei der externe Speicher zwischen dem logischen Volume und der Netzwerkschnittstelle zu übertragende Daten temporär speichert, wenn alle der Mehrzahl von Cache-Wegen in dem Teil des Last-Level-Caches, der zur ausschließlichen Verwendung durch das logische Volume und die Netzwerkschnittstellensteuerung zugewiesen ist, zu übertragende Daten speichern.

13. Mindestens ein maschinenlesbares Medium, umfassend eine Mehrzahl von Befehlen, die in Reaktion auf ihre Ausführung durch ein System das System zum Durchführen eines Verfahrens nach einem der Ansprüche 7 bis 12 veranlasst.

## Revendications

1. Appareil comprenant :
un serveur informatique (112) ; et
un serveur de stockage (400) pour gérer une pluralité de dispositifs de stockage couplés de manière communicative au serveur de stockage, le serveur informatique et le serveur de stockage étant couplés de manière communicative par l'intermédiaire d'un réseau, la pluralité de dispositifs de stockage gérés par le serveur de stockage étant dissociée du serveur informatique pour permettre à la capacité de stockage de la pluralité de dispositifs de stockage d'évoluer indépendamment du serveur informatique ; **caractérisé en ce que** le serveur de stockage comprend en outre :
un contrôleur d'interface réseau (302) couplé de manière communicative au réseau ; et
un système sur puce (306, 604), le système sur puce comprenant une pluralité de cœurs et une mémoire cache de dernier niveau, la pluralité de cœurs étant couplée de manière communicative à la mémoire cache de dernier niveau, la mémoire cache de dernier niveau comprenant une pluralité de voies de cache, une partie de la pluralité de voies de cache étant allouée pour une utilisation exclusive par un volume logique dans la pluralité de dispositifs de stockage et le contrôleur d'interface réseau étant configuré pour transférer des données entre le volume logique et la pluralité de voies de cache.

2. Appareil selon la revendication 1, dans lequel la partie de la pluralité de voies de cache est allouée pendant l'initialisation.

3. Appareil selon la revendication 2, dans lequel le volume logique stocke des données destinées à être utilisées par le serveur de calcul.

4. Appareil selon la revendication 3, dans lequel les données transférées entre le volume logique et la pluralité de voies de cache dans le cache de dernier niveau sont transférées entre le serveur de stockage et le serveur de calcul par l'intermédiaire du réseau couplé de manière communicative au contrôleur d'interface réseau.

5. Appareil selon la revendication 1, dans lequel au moins l'un de la pluralité de cœurs est alloué pour une utilisation exclusive par un volume logique dans la pluralité de dispositifs de stockage et le contrôleur d'interface réseau pour transférer des données entre le volume logique et le contrôleur d'interface réseau.

6. Appareil selon la revendication 1, comprenant en outre une mémoire externe couplée au système sur puce, la mémoire externe servant à stocker temporairement les données à transférer entre le volume logique et l'interface réseau lorsque l'ensemble de la pluralité de voies de cache de la partie de cache de dernier niveau allouée à l'usage exclusif du volume logique et du contrôleur d'interface réseau stockent les données à transférer.

7. Procédé comprenant les étapes suivantes :
gérer, par un serveur de stockage (400), une pluralité de dispositifs de stockage couplés de manière communicative au serveur de stockage ; et
coupler de manière communicative par l'intermédiaire d'un réseau, le serveur de stockage à un serveur de calcul (112), la pluralité de dispositifs de stockage gérés par le serveur de stockage étant dissociée du serveur de calcul pour permettre à la capacité de stockage de la pluralité de dispositifs de stockage d'évoluer indépendamment du serveur de calcul ; **caractérisé en ce que** le serveur de stockage comprend :
un contrôleur d'interface réseau (302) couplé de manière communicative au réseau ; et
un système sur puce (306, 604), le système sur puce comprenant une pluralité de cœurs et une mémoire cache de dernier niveau, la pluralité de cœurs étant couplée de manière communicative à la mémoire cache de dernier niveau, la mémoire cache de dernier niveau comprenant une pluralité de voies de cache, une partie de la pluralité de voies de cache étant allouée pour une utilisation exclusive par un volume logique dans la pluralité de dispositifs de stockage et le contrôleur d'interface réseau pour transférer des données entre le volume logique et la pluralité de voies de cache.

8. Procédé selon la revendication 7, dans lequel la partie de la pluralité de voies de cache est allouée pendant l'initialisation.

9. Procédé selon la revendication 8, dans lequel le volume logique stocke des données destinées à être utilisées par le serveur de calcul.

10. Procédé selon la revendication 9, dans lequel les données transférées entre le volume logique et la pluralité de voies de cache dans le cache de dernier niveau sont transférées entre le serveur de stockage et le serveur de calcul par l'intermédiaire du réseau couplé de manière communicative au contrôleur d'interface réseau.

11. Procédé selon la revendication 7, dans lequel au moins l'un de la pluralité de cœurs est alloué pour une utilisation exclusive par un volume logique dans la pluralité de dispositifs de stockage et le contrôleur d'interface réseau pour transférer des données entre le volume logique et le contrôleur d'interface réseau.

12. Procédé selon la revendication 7, comprenant en outre une mémoire externe couplée au système sur puce, la mémoire externe servant à stocker temporairement les données à transférer entre le volume logique et l'interface réseau lorsque l'ensemble de la pluralité de voies de cache de la partie de cache de dernier niveau allouée à l'usage exclusif du volume logique et du contrôleur d'interface réseau stockent les données à transférer.

13. Au moins un support lisible par machine comprenant une pluralité d'instructions qui, en réponse à leur exécution par un système, amènent le système à mettre en œuvre un procédé selon l'une quelconque des revendications 7 à 12.
